# EUROPEAN PATENT APPLICATION

(11) **EP 4 708 218 A1**
(43) Date of publication of application: **11.03.2026**
(21) Application number: 25191314.1
(22) Date of filing: 23.07.2025
(51) Int. Cl.: G06V 10/80, G06V 10/82, G06V 20/10, G06V 20/56, G06V 10/764, G06V 20/64

(54) **METHODS OF CLASSIFYING ANOMALIES IN AGRICULTURAL FIELDS, AND RELATED AGRICULTURAL VEHICLES**

(30) Priority: 09.09.2024 GB 202413243
(71) Applicant: AGCO International GmbH, 8212 Neuhausen am Rheinfall (CH)
(72) Inventor: MUJKIC, Esma, 8930 Randers (DK); CHRISTIANSEN, Martin Peter, 8930 Randers (DK); SLEZAK, Filip, 8930 Randers (DK); LAURSEN, Morten Stigaard, 8930 Randers (DK)
(74) Representative: AGCO Intellectual Property Department

(57) **Abstract**

An agricultural vehicle includes multiple sensors operably coupled to the agricultural vehicle, and an anomaly detection system that acquires sensor data from the multiple sensors. The anomaly detection system operates on a computing device including at least one processor, and instructions that cause the processor to receive sensor data from the multiple sensors, utilize advanced machine learning model techniques to detect both static and dynamic anomalies in an agricultural field surrounding the agricultural vehicle, and control operations of the agricultural vehicle based on the detected anomalies. Related agricultural vehicles and methods are also disclosed.

## Description

### CROSS-REFERENCE TO RELATED APPLICATION

N/A.

### FIELD

Embodiments of the present disclosure relate generally to agricultural vehicles including various sensors that provide data to an anomaly detection system. Embodiments of the present disclosure further relate to controlling operations of the agricultural vehicle in an agricultural environment based on anomalies detected by the anomaly detection system, and to related systems and methods.

### BACKGROUND

In the field of agriculture, vehicles such as tractors, harvesters, and other specialized equipment are commonly used to perform various tasks in broad acre fields. It has become increasingly common for these types of agricultural vehicles to feature automated driving and/or safety systems that rely on data from various sensors mounted to the agricultural vehicle to automatically move the agricultural vehicle through a field or other similar environment. These vehicles, however, often operate in complex and dynamic agricultural environments where anomalies may be present. For example, anomalies in an agricultural setting may include stones, non-standard structures, misplaced objects, power poles, trees, buildings, bodies of water, human bystanders, animals, and more.

Some systems include anomaly detection features that rely on data from LiDAR units, GNSS units, and/or RADAR units. While these anomaly detectors can provide some information about the environment surrounding an agricultural vehicle, they generally have limitations in terms of accuracy, cost, and complexity. Additionally, such anomaly detectors are often poorly suited for detecting many of the types of anomalies commonly present in agricultural settings such as, small objects, thin obstacles, or irregularly shaped features.

In some instances, anomaly detectors have been proposed that incorporate camera-based features to compensate for the shortcomings of other sensor-based systems. Camera-based anomaly detectors can capture rich visual information in a more cost-effective way. Despite this, existing camera-based systems for anomaly detection typically suffer from several issues, such as difficulty in handling varying lighting conditions, occlusions, and clutter in images. Moreover, many of these camera-based systems rely on traditional image processing techniques or simple machine learning models, which typically fail to robustly and accurately detect a wide range of anomalies in complex agricultural settings.

These shortcomings are further compounded by existing anomaly detection systems inability to consider spatial distributions and relationships between anomalies in a complex setting. This is particularly true when the anomaly is moving through the agricultural setting (e.g., as with a person who is walking through a field), when the agricultural vehicle is moving, or when both the anomaly and the vehicle are moving-as is common in agricultural settings.

### BRIEF SUMMARY

In one or more embodiments, a method of operating an agricultural vehicle in an agricultural field can include receiving sensor data from a plurality of sensor units coupled to the agricultural vehicle, fusing the sensor data to generate a three-dimensional point-cloud dataset that represents the agricultural field, detecting one or more anomalies in the three-dimensional point-cloud dataset, determining one or more classifications for each of the one or more anomalies based on characteristics of each of the one or more anomalies, and controlling one or more operations of the agricultural vehicle based on the one or more classifications for each of the one or more anomalies.

In some embodiments, the plurality of sensor units coupled to the agricultural vehicle comprise one or more of LiDAR units or RADAR units, wherein the LiDAR units comprise one or more of rotating LiDAR units, flash LiDAR units, solid-state time of flight LiDAR units, or solid-state frequency-modulated LiDAR units, and wherein the RADAR units comprise one or more of frequency-modulated continuous wave RADAR units or stepped frequency modulation RADAR units. Additionally, in some embodiments, the method further includes preprocessing the sensor data to remove noise, correct for sensor inaccuracies, and improve data quality. In at least one embodiment, detecting the one or more anomalies in the three-dimensional point-cloud dataset can include one or more of: detecting the one or more anomalies by applying one or more clustering algorithms to the three-dimensional point-cloud dataset, detecting the one or more anomalies utilizing machine learning techniques in connection with the three-dimensional point-cloud dataset, or detecting the one or more anomalies utilizing geometric-based approaches in connection with the three-dimensional point-cloud dataset.

In one or more embodiments, detecting the one or more anomalies by applying one or more clustering algorithms to the three-dimensional point-cloud dataset can include grouping similar points within the three-dimensional point-cloud dataset together to identify outliers or unusual groups of points. Additionally, in one or more embodiments, detecting the one or more anomalies utilizing machine learning techniques in connection with the three-dimensional point-cloud dataset can include classifying points or regions within the three-dimensional point-cloud dataset as normal or anomalous utilizing one or more of random forests, support vector machines, or deep learning models. Furthermore, in one or more embodiments, detecting the one or more anomalies utilizing geometric-based approaches in connection with the three-dimensional point-cloud dataset can include analyzing a shape and structure of the three-dimensional point-cloud dataset to identify irregularities.

In one or more embodiments, determining one or more classifications for each of the one or more anomalies based on characteristics of each of the one or more anomalies can include determining one or more of a size of each of the one or more anomalies, determining a location relative to the agricultural vehicle of each of the one or more anomalies, determining additional properties of each of the one or more anomalies. Additionally, in at least one embodiment, controlling one or more operations of the agricultural vehicle based on the one or more classification for each of the one or more anomalies can include one or more of: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight areas of the agricultural field indicated by the one or more anomalies, causing the agricultural vehicle to flash onboard visual lights, or causing the agricultural vehicle to sound a horn or other auditory system.

In one or more embodiments, an agricultural vehicle positioned in an agricultural field can include: one or more sensors operably coupled to the agricultural vehicle, and an anomaly detection system operably coupled to the one or more sensors, the anomaly detection system can include: at least one processor, and at least one non-transitory computer-readable storage medium having instructions thereon that, when executed by the at least one processor, cause the anomaly detection system to: receive sensor data from a plurality of sensor units coupled to the agricultural vehicle, fuse the sensor data to generate a three-dimensional point-cloud dataset that represents an agricultural field where the agricultural vehicle is located, detect one or more anomalies in the three-dimensional point-cloud dataset, determine one or more classifications for each of the one or more anomalies based on characteristics of each of the one or more anomalies, and control one or more operations of the agricultural vehicle based on the one or more classifications for each of the one or more anomalies.

The plurality of sensor units coupled to the agricultural vehicle may include one or more of LiDAR units or RADAR units, wherein the LiDAR units comprise one or more of rotating LiDAR units, flash LiDAR units, solid-state time of flight LiDAR units, or solid-state frequency-modulated LiDAR units, and wherein the RADAR units comprise one or more of frequency-modulated continuous wave RADAR units or stepped frequency modulation RADAR units.

The at least one non-transitory computer-readable storage medium may further store instructions thereon that, when executed by the at least one processor, cause the anomaly detection system to preprocess the sensor data to remove noise, correct for sensor inaccuracies, and improve data quality.

In some embodiments, at least one non-transitory computer-readable storage medium further stores instructions thereon that, when executed by the at least one processor, cause the anomaly detection system to detect the one or more anomalies in the three-dimensional point-cloud dataset by one or more of detecting the one or more anomalies by applying one or more clustering algorithms to the three-dimensional point-cloud dataset, detecting the one or more anomalies utilizing machine learning techniques in connection with the three-dimensional point-cloud dataset, or detecting the one or more anomalies utilizing geometric-based approaches in connection with the three-dimensional point-cloud dataset.

Detecting the one or more anomalies by applying one or more clustering algorithms to the three-dimensional point-cloud dataset may include grouping similar points within the three-dimensional point-cloud dataset together to identify outliers or unusual groups of points. In some embodiments, detecting the one or more anomalies utilizing machine learning techniques in connection with the three-dimensional point-cloud dataset includes classifying points or regions within the three-dimensional point-cloud dataset as normal or anomalous utilizing one or more of random forests, support vector machines, or deep learning models.

Detecting the one or more anomalies utilizing geometric-based approaches in connection with the three-dimensional point-cloud dataset may include analyzing a shape and structure of the three-dimensional point-cloud dataset to identify irregularities.

The at least one non-transitory computer-readable storage medium may further store instructions thereon that, when executed by the at least one processor, cause the anomaly detection system to determine one or more classifications for each of the one or more anomalies based on characteristics of each of the one or more anomalies by determining one or more of a size of each of the one or more anomalies, determining a location relative to the agricultural vehicle of each of the one or more anomalies, determining additional properties of each of the one or more anomalies.

In some embodiments, the at least one non-transitory computer-readable storage medium further stores instructions thereon that, when executed by the at least one processor, cause the anomaly detection system to control one or more operations of the agricultural vehicle based on the one or more classifications for each of the one or more anomalies by one or more of causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight areas of the agricultural field indicated by the one or more anomalies, causing the agricultural vehicle to flash onboard visual lights, or causing the agricultural vehicle to sound a horn or other auditory system.

In one or more embodiments, an agricultural vehicle positioned in an agricultural field includes: a propulsion system, wheels operably coupled to a chassis and the propulsion system, one or more sensors operably coupled to the agricultural vehicle, and an anomaly detection system operably coupled to the one or more sensors, the anomaly detection system including: at least one processor, and at least one non-transitory computer-readable storage medium having instructions thereon that, when executed by the at least one processor, cause the anomaly detection system to: receive sensor data from a plurality of sensor units coupled to the agricultural vehicle, fuse the sensor data to generate a three-dimensional point-cloud dataset that represents an agricultural field where the agricultural vehicle is located, detect one or more anomalies in the three-dimensional point-cloud dataset, determine one or more classifications for each of the one or more anomalies based on characteristics of each of the one or more anomalies, and control one or more operations of the agricultural vehicle based on the one or more classifications for each of the one or more anomalies.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified overview of an agricultural field including both static and dynamic anomalies where an agricultural vehicle may move through a predefined route, in accordance with one or more embodiments of the disclosure.
FIG. 2 is a simplified perspective view of an agricultural vehicle including an anomaly detection system, in accordance with one or more embodiments of the disclosure.
FIG. 3 is a simplified overview of an encoder-decoder machine learning model, in accordance with one or more embodiments of the disclosure.
FIG. 4 is an overview diagram of the process of utilizing an encoder-decoder machine learning model to generate anomaly predictions associated with an agricultural field, in accordance with one or more embodiments of the disclosure.
FIGS. 5 and 6 illustrate additional detail associated with the process of generating anomaly predictions associated with an agricultural field, in accordance with one or more embodiments of the disclosure.
FIGS. 7A-7F illustrate diagrams of example embodiments of the anomaly detection system, in accordance with one or more embodiments of the disclosure.
FIGS. 8A-8F illustrate flow diagrams of methods of controlling operations of an agricultural vehicle based on agricultural anomalies detected by the anomaly detection system, in accordance with one or more embodiments of the disclosure.
FIG. 9 is a schematic of a computer-readable storage medium including processor-executable instructions configured to embody one or more of the methods of operating an agricultural vehicle.

### DETAILED DESCRIPTION

The illustrations presented herein are not actual views of any agricultural vehicles or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure, assembly, spreader, or agricultural implement. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structures and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

From reading the following description it should be understood that the terms "longitudinal" and "transverse" are made in relation to a machine's (e.g., agricultural implement's, agricultural application machine's) normal direction of travel. In other words, the term "longitudinal" equates to the fore-and-aft direction, whereas the term "transverse" equates to the crosswise direction, or left and right. As used herein, the terms "lateral" and "transverse" are used interchangeably. Furthermore, the terms "axial" and "radial" are made in relation to a rotating body such as a shaft, wherein axial relates to a direction along the rotation axis and radial equates to a direction perpendicular to the rotation axis.

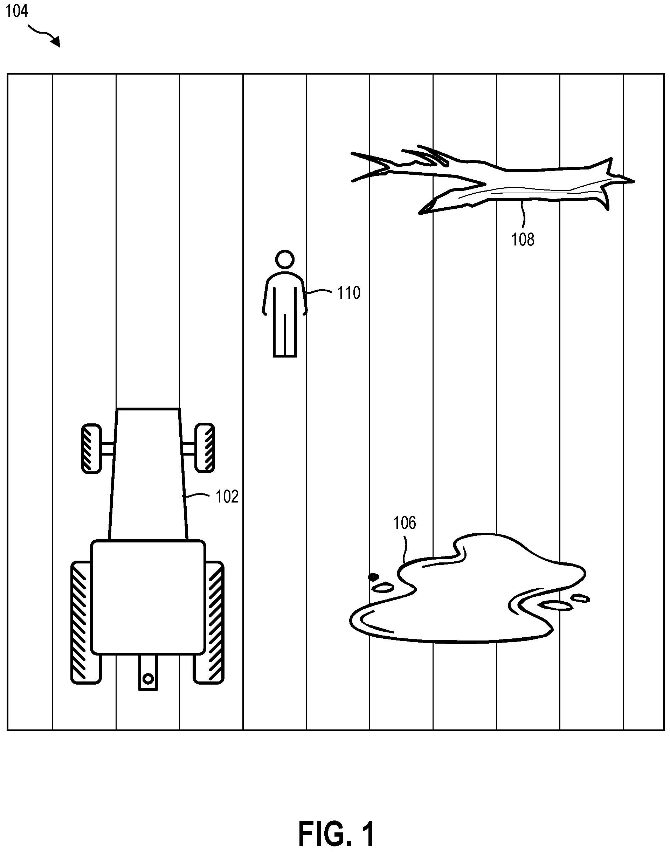

As mentioned above, conventional anomaly detection techniques fail to robustly and accurately detect anomalies that are unique to agricultural settings. To illustrate, FIG. 1 depicts an agricultural vehicle 102 moving in an agricultural field 104. Generally, the agricultural vehicle 102 may move along a predetermined route to interact with the entire agricultural field 104 (e.g., to harvest a crop, to turn over the soil, to spread fertilizer, etc.). In some embodiments, the agricultural vehicle 102 may be un-manned-either operating autonomously or being driven remotely. In additional embodiments, the agricultural vehicle 102 may be manned by a human operator. Despite this, even when a human operator is driving the agricultural vehicle 102, anomalies may be difficult for the operator to see due to poor lighting conditions, placement of the anomalies, and so forth.

As further shown in FIG. 1, the agricultural field 104 may include various anomalies. For example, the agricultural field 104 may include pooled water 106, a fallen tree 108, or even a person 110 walking through the agricultural field 104. In one or more embodiments, an anomaly within the agricultural field 104 can include any object, person, or animal within the agricultural field 104 whose presence in the agricultural field 104 deviates from what is standard, normal, or expected in that setting. To illustrate, the pooled water 106 may be present as the result of a broken pipe or heavy rainstorm. Similarly, the fallen tree 108 may have been standing near the agricultural field 104 until it was blown down in a storm. Some anomalies in the agricultural setting may be static, such as with the pooled water 106 and the fallen tree 108. Other anomalies in the same setting may be dynamic (e.g., moving) as with the person 110, animals, other vehicles, objects blowing in the wind, and so forth. Moreover, the agricultural vehicle 102 may also be static or dynamic within the agricultural field 104.

Any of the anomalies potentially present within the agricultural field 104 can present hazards and safety issues for the agricultural vehicle 102. For example, the pooled water 106 can cause the agricultural vehicle 102 to get stuck in the mud or can cause engine problems if the water is too deep. The fallen tree 108 can cause the agricultural vehicle 102 or a boom extending from the agricultural vehicle 102 to become ensnared or blocked. Moreover, the person 110 could be seriously harmed if the agricultural vehicle 102 travels too close to them. All of these scenarios are further complicated when the anomaly and/or the agricultural vehicle 102 is dynamic (e.g., moving), when the current weather is making visibility difficult, when it is nighttime, and so forth.

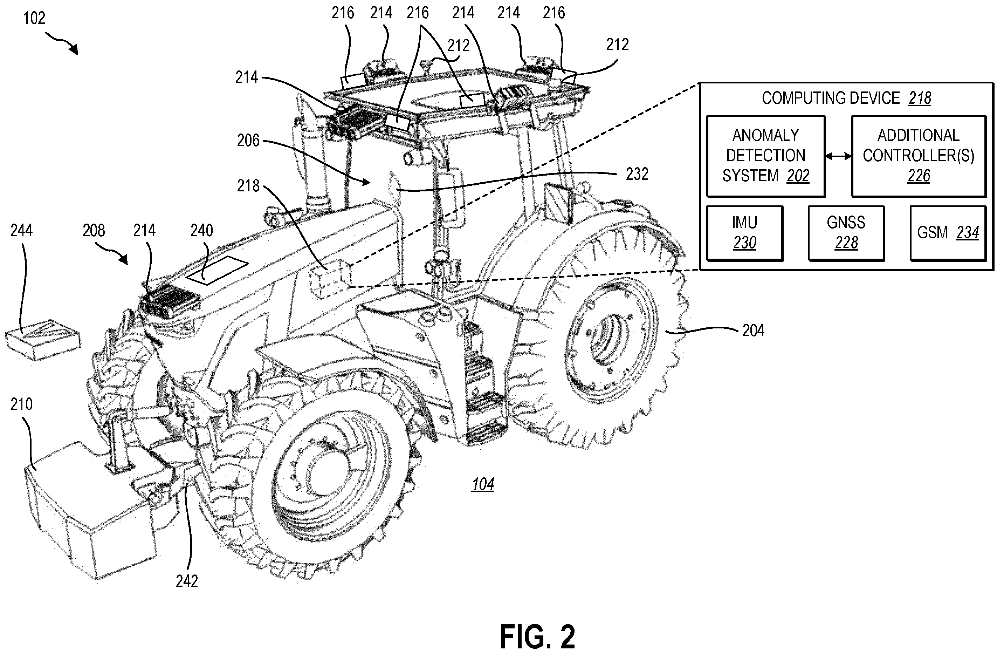

In one or more embodiments, the anomaly detection system disclosed herein utilizes various approaches to robustly and accurately detected anomalies in an agricultural field (e.g., the agricultural field 104) and control operations of the agricultural vehicle 102 based on those detected anomalies. FIG. 2 is a simplified perspective view of the agricultural vehicle 102 including an anomaly detection system 202 as part of a computing device 218, in accordance with one or more embodiments of the disclosure. In some embodiments, the agricultural vehicle 102 includes a tractor. However, the agricultural vehicle 102 may include agricultural vehicles or implements other than and/or in addition to a tractor, such as, for example, a combine, a planter, a tiller, a sprayer, a harvester, a swather, a mower, a spreader, or another agricultural vehicle. The agricultural vehicle 102 may be configured to drive over the agricultural field 104, such as discussed above. The agricultural vehicle 102 includes wheels 204 (e.g., tires) configured for facilitating traversal of the agricultural vehicle 102 over the agricultural field 104.

The agricultural vehicle 102 includes an operator cabin 206 from which an operator of the agricultural vehicle 102 may control the agricultural vehicle 102, and an engine compartment 208 housing an engine or other propulsion system for providing a motive force for moving the agricultural vehicle 102. In some embodiments, the propulsion system includes motors operably coupled to the wheels 204 of the agricultural vehicle 102. The agricultural vehicle 102 includes a steering system (e.g., a steering wheel and associated steering column, universal joint, and rack-and-pinion) configured for facilitating steering and navigation of the agricultural vehicle 102. The agricultural vehicle 102 may include one or more additional structures or assemblies, such as a header 210, configured for performing one or more agricultural operations (e.g., towing an agricultural implement (e.g., a spreader, row units of a planter), a trailer, etc.

As mentioned above, the agricultural vehicle 102 may include various sensors operably coupled to the agricultural vehicle 102. For example, the agricultural vehicle 102 may include one or more cameras 214 operably coupled to the agricultural vehicle 102. The one or more cameras 214 may be configured to capture image data. The image data may be grayscale image data, color image data (e.g., in the RGB color space), or multispectral image data. The one or more cameras 214 may include one or more of a 2D-camera, a stereo camera, a time-of-flight (ToF) camera configured to capture 2D and/or 3D image data. In some embodiments, a ToF camera may facilitate determining depth information and can improve the accuracy of image data and object pose determination based on the image data received by the one or more cameras 214.

In some embodiments, the one or more cameras 214 are configured to capture 3D image data and may include, for example, a stereo camera. In other embodiments, the one or more cameras 214 are configured to capture 2D image data. The one or more cameras 214 may include one or more of a red, green, blue (RGB) camera, a RGB-IR camera (configured to provide visible images and thermal (e.g., IR) images), a charge-coupled device (CCD) camera, a complementary metal oxide semiconductor (CMOS) image sensor, a stereoscopic camera, a monoscopic camera, a short-wave infrared (SWIR) camera (e.g., configured to capture electromagnetic radiation (e.g., light) having a wavelength within a range of from about 0.4 µm to about 2.5 µm, such as from about 0.9 µm to about 1.7 µm or from about 0.4 µm to about 1.9 µm), or a digital single-reflex camera. In some embodiments, the one or more cameras 214 are configured to capture image data through smoke, fog, snow, and rain and may include a SWIR camera. In some embodiments, the one or more cameras 214 include an RGB-SWIR line scan camera (a 4-sensor RGB SWIR line scan camera). In other embodiments, the one or more cameras 214 are configured to capture RGB image data, SWIR data, long-wave IR (LWIR) data, and/or near-infrared (NIR) data.

The one or more cameras 214 may be configured to capture image data at a frame rate within a range of from about 10 Hz to about 30 Hz. In some embodiments, the frame rate of each of the one or more cameras 214 is substantially the same. However, the disclosure is not so limited, and the frame rate of the one or more cameras 214 may be different than that described. A FOV of each of the one or more cameras 214 may be within a range of from about 60° to about 360°, such as from about 60° to about 90°, from about 90° to about 120°, from about 120° to about 180°, or from about 180° to about 360°. However, the disclosure is not so limited, and the FOV of each of the one or more cameras 214 may be different than those described. In some embodiments, the FOV of each of the one or more cameras 214 is substantially the same as the FOV of the one or more cameras 214.

Additionally, the agricultural vehicle 102 may include one or more light detection and ranging (LiDAR) units 212. In one or more embodiments, the one or more LiDAR units 212 measure distances by illuminating a target with laser light and analyzing the reflected light. For example, each of the one or more LiDAR units 212 can emit a laser pulse toward an object or surface. This laser pulse hits the object or surface and reflects back to the LiDAR unit, which detects the reflected light. The one or more LiDAR units 212 (or a system operating the one or more LiDAR units 212) calculates the distance to the object or surface by measuring the time it took for the laser pulse to return (e.g., "time of flight" or TOF). In one or more embodiments, the one or more LiDAR units 212 have both an orientation and a field of view. In some embodiments, each of the one or more LiDAR units 212 share an orientation and a field of view with a corresponding camera from the one or more cameras 214. As such, by utilizing the one or more LiDAR units 212-alone or in combination with the one or more cameras 214-the anomaly detection system 202 can capture highly accurate 3D data of the agricultural field 104. The one or more LiDAR units 212 can include one or more of rotating LiDAR units, flash LiDAR units, solid-state time of flight LiDAR units, or solid-state frequency-modulated LiDAR units.

Additionally, the agricultural vehicle 102 may include one or more RADAR units 216 operably coupled to the agricultural vehicle 102. In some embodiments, a field of view (FOV) of the one or more cameras 214 is substantially the same (e.g., overlaps) a FOV of the one or more RADAR units 216. In one or more embodiments, the one or more cameras 214 and the one or more RADAR units 216 are configured to provide a 3D surround stereo view of the surroundings of the agricultural vehicle 102.

The one or more LiDAR units 212, the one or more cameras 214, the one or more RADAR units 216, and any of the other sensors mounted to the agricultural vehicle 102 may directly neighbor one another. For example, in some embodiments, the one or more cameras 214 are located at substantially a same elevation (e.g., height) as the one or more RADAR units 216 or other sensors, but are laterally spaced therefrom. In other embodiments, the one or more cameras 214 are horizontally aligned (e.g., left and right) with the one or more RADAR units 216 or other sensors, but is vertically displaced therefrom (e.g., located above or below the one or more RADAR units 216).

The one or more RADAR units 216 may include a transmitter configured to transmit a high-frequency signal, an antenna configured to broadcast the high-frequency signal, and a receiver configured to receive the high-frequency signal reflected from one or more objects in the environment. The one or more RADAR units can include one or more of frequency-modulated continuous wave RADAR units or stepped frequency modulation RADAR units. The one or more RADAR units 216 may further include a signal processor configured to determine one or more properties of object(s) from which the high-frequency signal was reflected. The one or more RADAR units 216 may be configured to scan and receive RADAR data at a rate within a range of from about 10 Hz to about 50 Hz. However, the disclosure is not so limited, and the scan rate of the one or more RADAR units 216 may be different than that described. In some embodiments, the scan rate of the one or more RADAR units 216 may be different than the frame rate of the one or more cameras 214.

A FOV of each of the one or more RADAR units 216 may be within a range of from about 60° to about 360°, such as from about 60° to about 90°, from about 90° to about 120°, from about 120° to about 180°, or from about 180° to about 360°. However, the disclosure is not so limited, and the FOV of each of the one or more RADAR units 216 may be different than those described. In some embodiments, the FOV of each of the one or more RADAR units 216 is substantially the same as the FOV of the remaining one or more RADAR units 216.

The one or more RADAR units 216 may include a synthetic aperture RADAR (SAR) or an inverse synthetic aperture RADAR (ISAR) configured to facilitate receiving relatively higher resolution data compared to conventional RADARs. The one or more RADAR units 216 may be configured to scan the RADAR signal across a range of angles to capture a 2D representation of the environment, each pixel representing the RADAR reflectivity at a specific distance and angle. In other embodiments, the one or more RADAR units 216 includes a 3D RADAR configured to provide range (e.g., distance, depth), velocity (also referred to as "Doppler velocity"), azimuth angle, and elevational angle. The one or more RADAR units 216 may be configured to provide a 3D RADAR point-cloud to the anomaly detection system 202.

The RADAR data may include one or more of analog-to-digital (ADC) signals, a RADAR tensor (e.g., a range-azimuth-doppler tensor), and a RADAR point-cloud. In some embodiments, the output RADAR data includes a point-cloud, such as a 2D RADAR point-cloud or a 3D RADAR point-cloud (also, simply referred to herein as a "3D point-cloud"). In some embodiments, the output RADAR data includes a 3D RADAR point-cloud.

Each of the image data, the LiDAR scan data, and the RADAR data may be of the environment around the agricultural vehicle 102. For example, the image data, LiDAR data, and the RADAR data may be of one or more of the agricultural field 104, animals (e.g., livestock, wild animals, domestic animals), humans, crops, rows of crops, trees, weeds, other plants, utility lines, bales of hay, rocks, wind turbines, fences and fence posts, shelter belts (lines of trees), agricultural vehicles (e.g., tractors, planters, sprayers, combiners, harvesters, mowers, trailers, forager), or other living object or inanimate object that may be proximate the agricultural vehicle 102 in the agricultural field 104.

The agricultural vehicle 102 may include the computing device 218 (also referred to as an "electronic control unit" (ECU), a "system controller," or a "computing unit") configured to facilitate one or more control operations (e.g., safety operations, anomaly detection, object detection, object avoidance, and remote planning operations) of the agricultural vehicle 102 and/or agricultural operation. As described with reference to FIG. 2, the computing device 218 may include the anomaly detection system 202, and one or more additional controllers 226. While the computing device 218 is illustrated as proximate to the engine compartment 208, such as between the engine compartment 208 and the operator cabin 206, in FIG. 2, the disclosure is not so limited. The computing device 218 may be operably coupled to the agricultural vehicle 102 at other locations. In some embodiments, the computing device 218 is located inside the operator cabin 206, such as proximate to an I/O device 232. In some embodiments, the computing device 218 is located on a device separate from the agricultural vehicle 102 (but located within the agricultural vehicle 102, such as in the operator cabin 206), such as one a tablet, laptop, or other device.

The agricultural vehicle 102 may further include a global navigation satellite system (GNSS) unit 228, an inertial measurement unit (IMU) 230, an input/output (I/O) device 232, and a global system for mobile communication (GSM) 234 (e.g., a telecommunication unit). In some embodiments, the I/O device 232 includes a user interface or display device. The I/O device 232 may include one or more devices configured to receiving a user input (e.g., from an operator) of the agricultural vehicle 102 and may include one or more of a keyboard, mouse, microphone, remote control device, button, joystick, trackball, touchpad, lightpen, a speaker, and display device. The I/O device 232 may be configured to receive a user input from the operator of the agricultural vehicle 102 and/or to provide one or more displays to the user. The I/O device 232 displays may include touch screen displays, non-touch screen displays, color displays, non-color displays, or any combination thereof.

While the GNSS unit 228, the IMU 230, and the GSM 234 are illustrated as part of the computing device 218, in other embodiments, one or more of the GNSS unit 228, the IMU 230, the I/O device 232, and the GSM 234 are not part of the computing device 218 and are in operable communication with the computing device 218. For example, the IMU 230 may be operably coupled to a chassis 242 of the agricultural vehicle 102, and one or both of the GNSS unit 228 and the GSM 234 may be operably coupled to the agricultural vehicle 102 external to the computing device 218.

The anomaly detection system 202 may be in operable communication with the IMU 230, the GNSS unit 228, and the GSM 234, in addition to the one or more additional controllers 226 configured to perform one or more control operations of the agricultural vehicle 102, such as one or more navigation controls (e.g., control of steering, acceleration, velocity, braking, and/or navigation of the agricultural vehicle 102). The anomaly detection system 202 may be configured to facilitate one or more safe operations of the agricultural vehicle 102. For example, the anomaly detection system 202 may be configured to facilitate anomaly avoidance of objects or other obstacles identified based on data from the one or more cameras 214, the one or more LiDAR units 212, and the one or more RADAR units 216, and/or other sensors to perform autonomous vehicle operation, to perform a leader-follower operation, to provide a display of the surroundings of the agricultural vehicle 102 to the I/O device 232, and to provide anomaly predictions to a remote location for remote planning, for example.

The anomaly detection system 202 may be in operable communication with the one or more cameras 214, the one or more LiDAR units 212, the one or more RADAR units 216, and any other sensors operably mounted to the agricultural vehicle 102 such as by wired or wireless communication. The anomaly detection system 202 may be configured to receive data from any of these sensors and facilitate anomaly detection in connection with the received data. To illustrate, the anomaly detection system 202 can apply various types of machine learning models to combinations of the sensor data acquired from the one or more LiDAR units 212, the one or more cameras 214, the one or more RADAR units 216, and other sensors to generate digital representations of the agricultural field 104 surrounding the agricultural vehicle 102. In some embodiments, the anomaly detection system 202 generates point-cloud datasets based on the sensor data and segments the point-cloud datasets according to anomaly predictions generated by the one or more machine learning models to precisely identify, categorize, and locate any anomalies in the agricultural field 104 surrounding the agricultural vehicle 102. Based on these determinations, the anomaly detection system 202 can further control operations of the agricultural vehicle 102 to avoid the identified anomalies, stop operation of the agricultural vehicle 102, make route changes for the agricultural vehicle 102, sound an alarm associated with the agricultural vehicle 102, and more.

In more detail, the one or more additional controllers 226 may include one or more of a speed controller, a track adjustment controller, a height adjustment controller, and a controller for facilitating one or more agricultural operations (e.g., a planting operation, a spreading operation, a spraying operation, a bailing operation, a cutting operation, a harvesting operation, or another operation).

In some embodiments, the GNSS 228 is in operable communication with a receiver 240. In some embodiments, the GNSS 228 includes a global positioning system (GPS) and the receiver 240 includes a GPS receiver. The receiver 240 may be configured for determining a position of the agricultural vehicle 102 during operation of the agricultural vehicle 102 (e.g., during traversal of the agricultural field 104 with the agricultural vehicle 102 and/or during capturing of image data with the one or more cameras 214 and capturing of RADAR data with the one or more RADAR units 216.

The IMU 230 may be operably coupled to the agricultural vehicle 102, such as to a chassis 242 of the agricultural vehicle 102. The computing device 218 may be in operable communication with and configured to receive data from the IMU 230. The IMU 230 may be configured to measure one or more of a specific force, an angular rate, and an orientation of the agricultural vehicle 102 and may include at least one of each of an accelerometer, a gyroscope, and a magnetometer. The IMU 230 may be configured to facilitate determining one or more of a linear acceleration of the agricultural vehicle 102, a direction of travel of the agricultural vehicle 102, rotational rates and angular velocity, and a strength and direction of a magnetic field. In some embodiments, each of three mutually orthogonal axes (e.g., the pitch, roll, and yaw) of the agricultural vehicle 102 include an accelerometer, a gyroscope, and a magnetometer.

The GSM 234 may include a digital mobile network and may facilitate digital communications between the agricultural vehicle 102 (e.g., the computing device 218, the anomaly detection system 202, and the one or more additional controllers 226).

In some embodiments, an object 244 (which may also be referred to as an "alignment object" or a "reference object") may be located on the agricultural vehicle 102 and may include a reference for alignment of data from the one or more cameras 214, the one or more LiDAR units 212, the one or more RADAR units 216, and any other sensors. In some embodiments, the object 244 is located on the ground of the agricultural field 104. In other embodiments, the object 244 is fixedly coupled to the agricultural vehicle 102 and in the FOV of at least one of the one or more cameras 214 and at least one of the one or more RADAR units 216.

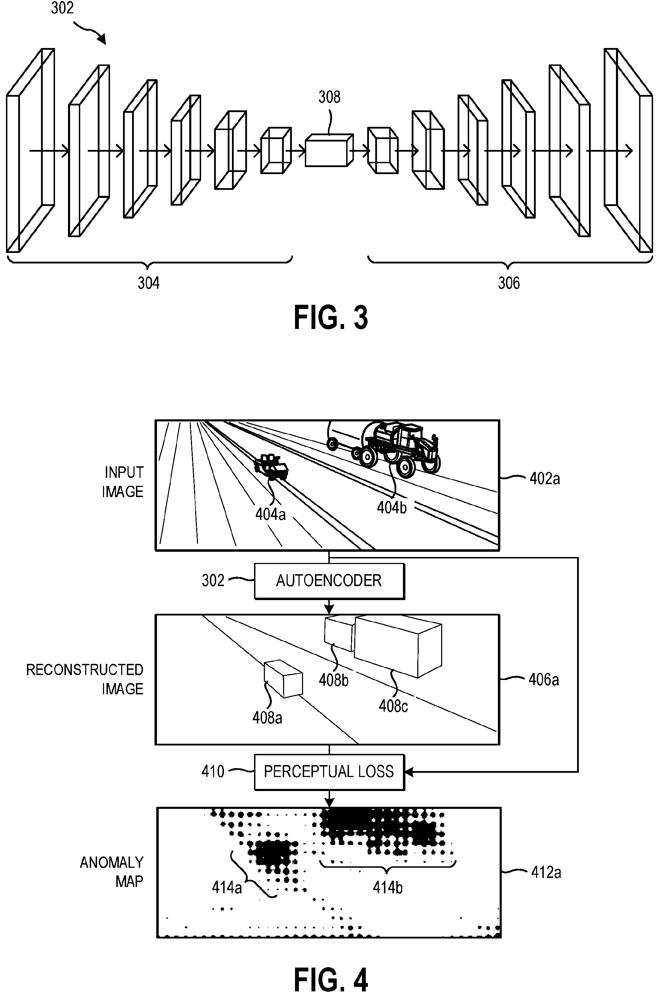

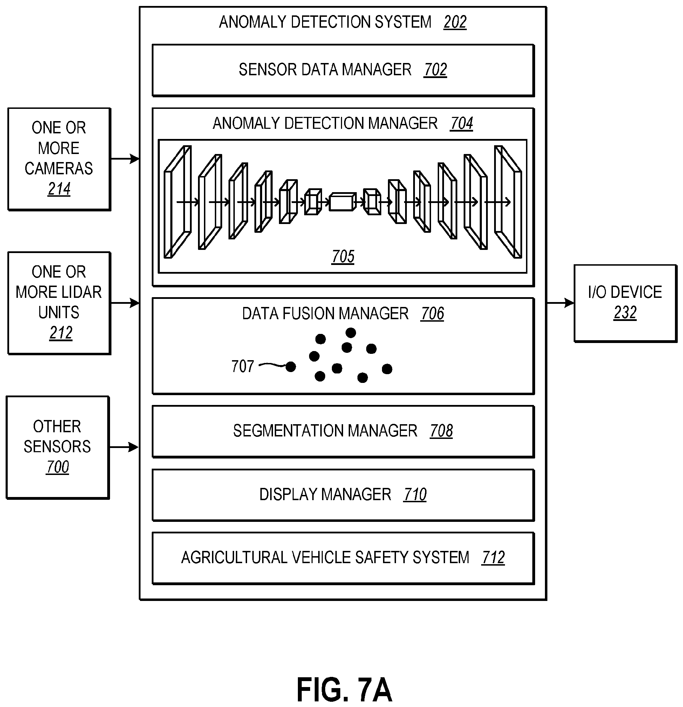

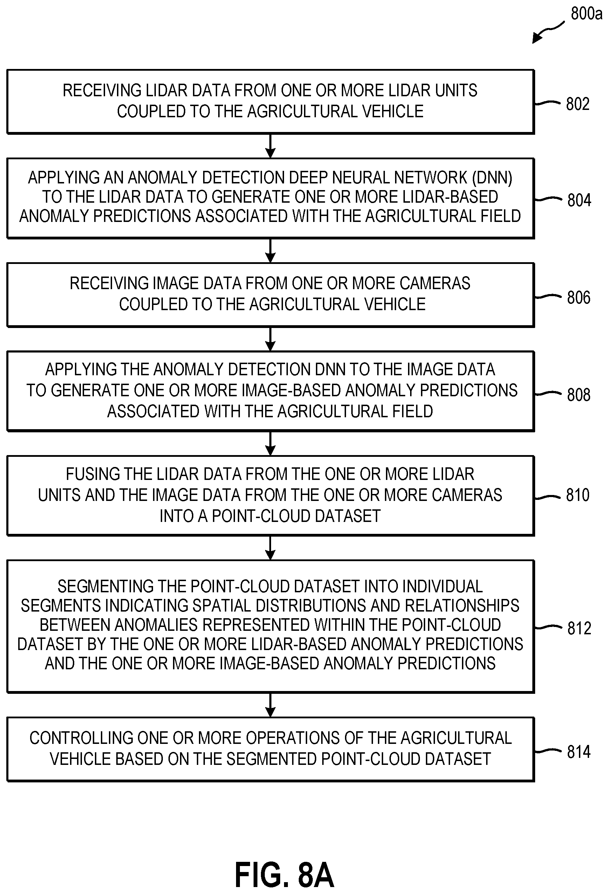

As mentioned above, the anomaly detection system 202 utilizes data from various sensors operably coupled to the agricultural vehicle 102 to robustly and accurately detect a wide range of anomalies within the agricultural field 104. FIGS. 3-6 provide an overview of how the anomaly detection system 202 detects these anomalies. FIGS. 7A-7F provide additional detail related to specific implementations of the anomaly detection system 202. FIGS. 8A-8F provide overviews of different methods of detecting anomalies and controlling operations of the agricultural vehicle 102 based on the detected anomalies.

In one or more embodiments, the anomaly detection system 202 implements an auto-encoder 302, such as illustrated in FIG. 3. For example, while other object detectors are limited to a predefined set of classes, the anomaly detection system 202 trains and maintains the auto-encoder 302 to recognize deviations from an established baseline pattern. In this way the auto-encoder 302 can detect a wide range of anomalies without being trained with a large and/or annotated training set.

In more detail, as shown in FIG. 3, the auto-encoder 302 (sometimes called an encoder-decoder) can include an encoder 304 and a decoder 306. In one or more embodiments, anomaly detection system 202 trains the auto-encoder 302 to encode (i.e., with the encoder 304) input data into a lower-dimensional representation (e.g., latent space) and then decode (i.e., with the decoder 306) it into a representation of the original input. For example, the encoder 304 can compress the input data into a smaller representation 308 of itself. The decoder 306 then reconstructs the original input from this smaller representation. This reconstruction is based on how the anomaly detection system 202 trains the auto-encoder 302.

In one or more embodiments, the anomaly detection system 202 trains the auto-encoder 302 on a dataset containing normal or typical sensor data associated with agricultural settings. For example, this dataset can include images and/or videos of normal agricultural fields (e.g., with no anomalies), RADAR data from normal agricultural fields, LiDAR data from normal agricultural fields, and so forth. Generally, training seeks to minimize the difference between the data input into the encoder 304 of the auto-encoder 302 and the reconstructed data generated by the decoder 306 of the auto-encoder 302. As a result of being trained on this "normal" data related to agricultural fields, the auto-encoder 302 learns to identify anything that may be abnormal or anomalous in new (e.g., unlearned) agricultural field data. In one or more implementations, and unlike standard model training, training the auto-encoder 302 does not require a large dataset or annotated input data. Instead, the anomaly detection system 202 trains the auto-encoder 302 to generate reconstructed data that includes areas of poor reconstruction where anomalies exist in the underlying input.

To illustrate, FIG. 4 provides an overview of the anomaly detection system 202 identifying areas of anomaly in an input image 402a. For example, the input image 402a may be captured by the one or more cameras 214 mounted on the agricultural vehicle 102. As shown in the input image 402a, the agricultural field 104 may include additional vehicles 404a, 404b that surround the agricultural vehicle 102. In this example, the anomaly detection system 202 can generate an input vector from the input image 402a and apply the auto-encoder 302 to the generated input vector. As discussed above, the encoder 304 of the auto-encoder 302 can compress the input vector into a smaller representation 308, and then the decoder 306 of the auto-encoder 302 can generate a reconstructed image 406a that represents the original input image 402a. In one or more implementations, the auto-encoder 302 generates the reconstructed image 406a with areas 408a, 408b, and 408c of poor reconstruction. As discussed above, these areas 408a-408c of poor reconstruction indicate that the auto-encoder 302 found anomalous or unexpected data in those areas of the input image 402a. In the example shown in FIG. 4, the detected anomalies include a small vehicle and a larger agricultural vehicle in the agricultural field 104 near the agricultural vehicle 102.

In one or more embodiments, the anomaly detection system 202 applies one or more perceptual loss functions 410 (or reconstruction loss functions, such as feature reconstruction loss functions and/or reconstruction loss functions of non-feature-based losses) to the reconstructed image 406a. For example, the perceptual loss functions 410 are applied to compare the entire input image 402a to the reconstructed image 406a to determine the areas 408a-408c of poor reconstruction. In some embodiments, the anomaly detection system 202 can utilize the one or more perceptual loss functions 410 to compare the areas 408a-408c to additional, specific features. To illustrate, the one or more perceptual loss functions 410 may compare the areas 408a-408c to known anomalies such as vehicles, humans, animals, and other objects and obstacles. In at least one embodiment, the one or more perceptual loss functions 410 can generate an anomaly map 412a. For example, the anomaly map 412a can include heat map features where anomalies 414a, 414b are indicated within the anomaly map 412a are different or "hotter" colors. In additional implementations, the anomaly map 412a may include bounding boxes associated with the anomalies 414a, 414b indicating predicted edges of the anomalies 414a, 414b, and/or scores associated with the anomalies 414a, 414b indicating how likely it is that the geographic areas surrounding the agricultural vehicle 102 and corresponding to the predicted anomalies 414a, 414b actually include agricultural anomalies.

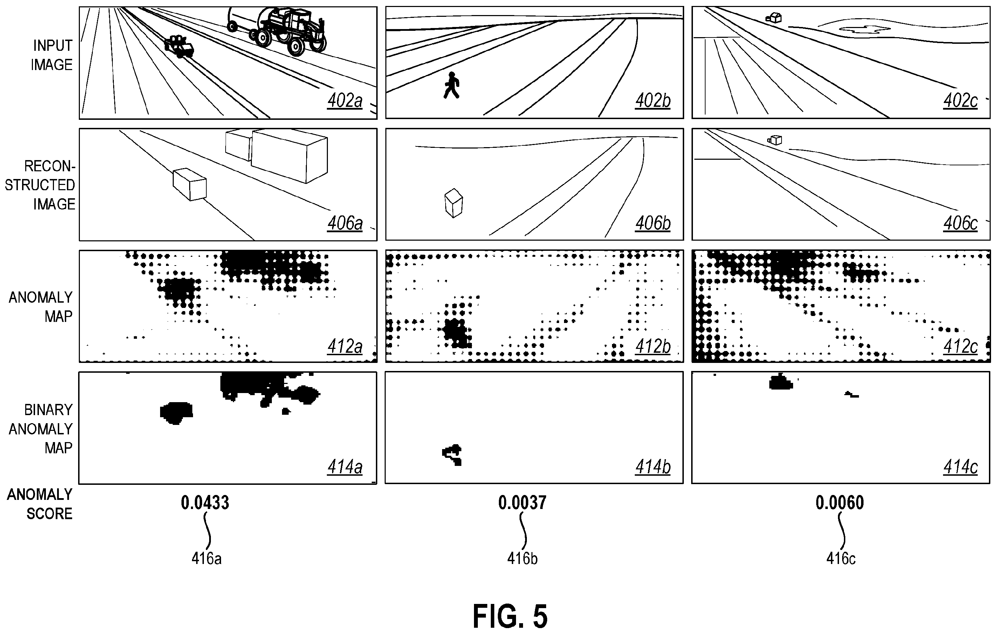

In more detail, FIG. 5 illustrates additional information associated with the anomaly detection process. For example, the anomaly detection system 202 applies the auto-encoder 302 to the input images 402b, 402c in addition to the input image 402a to generate the reconstructed images 406a, 406b, and 406c. As discussed above, the reconstructed images 406a-406c include areas of poor reconstruction. In response to further applying one or more perceptual loss functions 410 to the reconstructed images 406a-406c, the anomaly detection system 202 generates anomaly maps 412a, 412b, and 412c, respectively. As discussed above, the anomaly maps 412a-412c can function as heat maps where predicted anomalies have a "hotter temperature" than surrounding areas.

As further shown in FIG. 5, in at least one embodiment, the anomaly detection system 202 can further generate binary anomaly maps 414a, 414b, 414c, respectively, from the anomaly maps 412a-412c. For example, the anomaly detection system 202 can generate the binary anomaly maps 414a-414c by thresholding the anomaly maps 412a-412c (e.g., at the pixel level) and applying morphological operations as a post-processing operation. In some embodiments, the anomaly detection system 202 generate the binary anomaly maps 414a-414c by determining outer edges of the "hot" areas in the anomaly maps 412a-412c. The anomaly detection system 202 can then mask the pixels within these outer edges with a single color (e.g., white), and mask the pixels outside these outer edges with a different color (e.g., black). In some embodiments, the anomaly detection system 202 generates the binary anomaly maps 414a-414c by clustering methods and/or deep learning approaches.

Additionally, as shown in FIG. 5, anomaly detection system 202 can also generate anomaly scores 416a, 416b, and 416c, respectively for the anomalies detected in connection with the input images 402a-402c. For example, the anomaly detection system 202 can utilize the intensity of the "hot" areas in the anomaly maps 412a-412c in combination with the size of the masked areas in the binary anomaly maps 414a-414c to generate the anomaly scores 416a-416c. In one or more implementations, the anomaly scores 416a-416c indicate a likelihood that the corresponding input images 402a-402c depict an anomaly. Additionally or alternatively, the anomaly scores 416a-416c can indicate a severity, size, or speed of a predicted anomaly depicted in each of the input images 402a-402c.

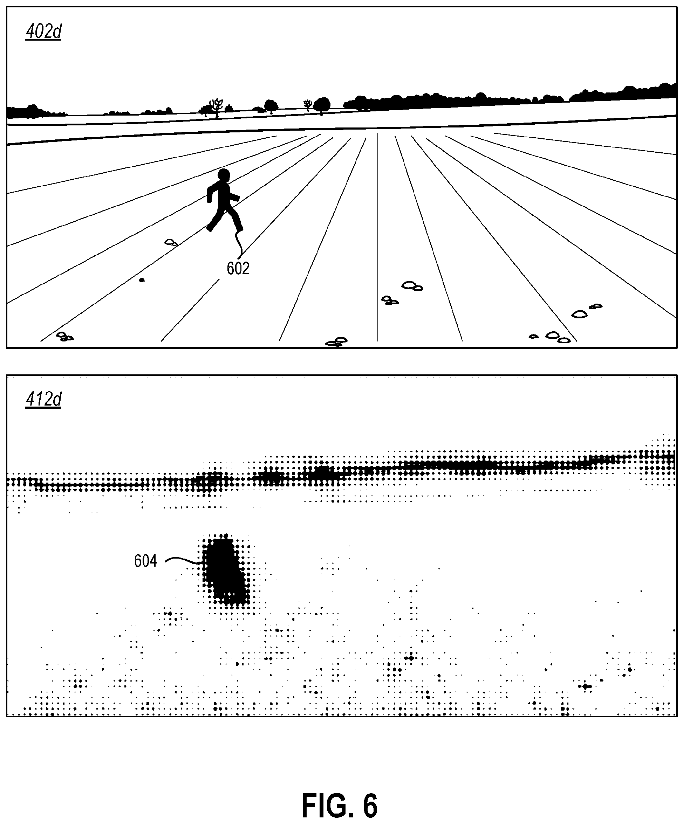

To further illustrate, as shown in FIG. 6, an input image 402d can depict a person 602 walking in front of the agricultural vehicle 102 in the agricultural field 104. The anomaly detection system 202 can apply the auto-encoder 302 to the input image 402d to generate the anomaly map 412d. In one or more implementations, the heat or color intensity of the area 604 in the anomaly map 412d can indicate both that an anomaly is present in that area, and that the severity of that anomaly (e.g., relative to the agricultural vehicle 102) is high because the anomaly is moving at a speed that is slower than that of the agricultural vehicle 102 moving toward the anomaly-indicating a possible collision. As mentioned above, the anomaly detection system 202 can perform one or more security actions based on this severity such as slowing the agricultural vehicle 102, stopping the agricultural vehicle 102, sounding an alarm within the agricultural vehicle 102, flashing one or more displayed components on the I/O device 232 inside the agricultural vehicle 102, and so forth.

While FIGS. 3-6 illustrate how the anomaly detection system 202 detects anomalies in connection with input images captured by the one or more cameras 214 on the agricultural vehicle 102. The anomaly detection system 202 can similarly detect anomalies in connection with other types of sensor data. For example, the anomaly detection system 202 can train the auto-encoder 302 to detect anomalies in sensor data from the one or more LiDAR units 212, the one or more RADAR units 216, and so forth. Additionally, the anomaly detection system 202 can also train the auto-encoder 302 to detect anomalies in combinations of sensor data from any of the sensors discussed herein.

As discussed above, the anomaly detection system 202 detects anomalies across a wide variety of agricultural scenarios and implementations. FIGS. 7A-7F illustrate embodiments of the anomaly detection system 202 operating in different ways in connection with the agricultural vehicle 102 and the agricultural field 104. For example, FIG. 7A illustrates how the anomaly detection system 202 can use data from a combination of sensors, detect anomalies within that sensor data, fuse the sensor data into a point-cloud dataset, segment the point-cloud dataset to reflect relationships between the anomalies detected within the sensor data, and control operations of the agricultural vehicle 102 based on the segmented point-cloud dataset.

In more detail, a sensor data manager 702 of the anomaly detection system 202 can receive sensor data from the one or more cameras 214, the one or more LiDAR units 212, and other sensors 700 (e.g., sensor data from the one or more RADAR units 216, the GNSS unit 228, the GSM 234). For example, the sensor data manager 702 can receive digital images captured by the one or more cameras 214-either individually or in sequences. Additionally, the sensor data manager 702 can receive one or more scans from the one or more LiDAR units 212. In some embodiments, the sensor data manager 702 can synchronize the received sensor data such that images and LiDAR scans are grouped together by the same or similar timestamps.

In one or more embodiments, an anomaly detection manager 704 can generate an input vector from the sensor data received by the sensor data manager 702. For example, the anomaly detection manager 704 can train and maintain an anomaly detection deep neural network (DNN) 705 that detects anomalies in agricultural sensor data. As such, the anomaly detection manager 704 can generate an input vector for the anomaly detection DNN 705 from the sensor data where features of the sensor data are represented in the input vector. The anomaly detection manager 704 can then apply the anomaly detection DNN 705 to the input vector to generate one or more anomaly predictions associated with the agricultural field 104 surrounding the agricultural vehicle 102. In one or more embodiments, the anomaly detection DNN 705 includes an auto-encoder (e.g., the auto-encoder 302 as shown in FIG. 3).

In some embodiments, the anomaly detection manager 704 applies the anomaly detection DNN 705 to different types of sensor data individually. For example, in one embodiment, the anomaly detection manager 704 applies the anomaly detection DNN 705 to an input vector generated with only the data provided by the one or more LiDAR units 212. In that embodiment, the DNN 705 generates one or more LiDAR-based anomaly predictions associated with the agricultural field 104. Similarly, in one embodiment, the anomaly detection manager 704 applies the anomaly detection DNN 705 to an input vector generated from digital images provided by the one or more cameras 214 to generate one or more image-based anomaly predictions associated with the agricultural field 104.

As discussed above, in one or more implementations, the anomaly detection DNN 705 includes an encoder-decoder computational model (e.g., the auto-encoder 302 discussed above in connection with FIG. 3). In at least one implementation, the anomaly detection system 202 trains the anomaly detection DNN 705 on typical (e.g., non-anomalous) agricultural sensor data until the anomaly detection DNN 705 learns to recognize features in agricultural data that are not typical (e.g., anomalous). Thus, in some implementations, the anomaly detection DNN 705 generates anomaly predictions that indicate both the item of sensor data that was anomalous (e.g., an area in a digital image, a portion of a LiDAR scan) and a certainty score indicating the likelihood that that item of sensor data contains an anomaly.

In some implementations, the anomaly detection manager 704 trains and maintains a single anomaly detection DNN 705 to apply to various types of sensor data input vectors. For example, the anomaly detection manager 704 can train the anomaly detection DNN 705 across a range of sensor data types to generate anomaly predictions associated with any type or combination of input sensor data. Additionally or alternatively, the anomaly detection manager 704 can train and maintain separate anomaly detection DNNs that are each specific to a single type of input data. In that implementation, for example, the anomaly detection manager 704 can apply an anomaly detection DNN that is specific to digital images (image data from the one or more cameras 214) to a digital image-based input vector to generate one or more image-based anomaly predictions. In another example, the anomaly detection manager 704 can apply an anomaly detection DNN that is specific to LiDAR scans to a LiDAR-based input vector to generate one or more LiDAR-based anomaly predictions.

As further shown in FIG. 7A, the anomaly detection system 202 can include a data fusion manager 706. In one or more implementations, the data fusion manager 706 works in parallel or in sequence with the anomaly detection manager 704. For example, the data fusion manager 706 can fuse the sensor data received by the sensor data manager 702 into a point-cloud dataset 707. As used herein, a point-cloud dataset refers to a collection of data points defined in a three-dimensional coordinate system. As such, the data fusion manager 706 can generate the point-cloud dataset 707 from the received sensor data by synchronizing the different types of sensor data for spatial alignment, and then combining features of the sensor data with extended metadata indicating a three-dimensional position of each pixel relative to the agricultural vehicle 102.

To illustrate, the sensor data manager 702 may receive both LiDAR sensor data from the one or more LiDAR units 212 and image-based sensor data from the one or more cameras 214. In one or more implementations, the data fusion manager 706 can synchronize the LiDAR sensor data and the image-based sensor data for spatial alignment such that images taken at a particular position relative to the agricultural vehicle 102 (e.g., taken straight ahead of the agricultural vehicle 102) are synchronized with LiDAR sensor data captured at the same position relative to the agricultural vehicle 102. The anomaly detection manager 704 can then combine features of the LiDAR data across pixels of the image data with extended metadata to generate combined feature data that indicates a three-dimensional position of each pixel relative to the agricultural vehicle 102.

In some embodiments, the sensor data manager 702 can acquire sensor data from other types of sensors. For example, the sensor data manager 702 can acquire data from the one or more RADAR units 216, global navigational satellite system units (e.g., the GNSS unit 228), telecommunication units (e.g., the GSM 234), and other sensors. The data fusion manager 706 can further fuse this sensor data with the point-cloud dataset 707 such that the point-cloud dataset 707 represents additional spatial and relational information associated with the one or more LiDAR-based anomaly predictions and the one or more image-based anomaly predictions. In some embodiments, the anomaly detection manager 704 applies the anomaly detection DNN 705 to the combined feature data (the fused data) to generate the anomaly predictions.

Following generation of the point-cloud dataset 707 by the data fusion manager 706, a segmentation manager 708 can segment the point-cloud dataset 707 into individual segments indicating spatial distributions and relationships between anomalies indicated by the one or more anomaly predictions generated by the anomaly detection DNN 705. For example, the segmentation manager 708 can determine positions of each of the anomaly predictions generated by the anomaly detection DNN 705 at relative locations within the point-cloud dataset 707. The segmentation manager 708 can then divide the point-cloud dataset 707 into segments based on the positions of the anomaly predictions and utilize the segments to further determine how the anomalies represented by the anomaly predictions are spatially distributed in the agricultural field 104 relative to the agricultural vehicle 102.

In more detail, the segmentation manager 708 can utilize one or more advanced deep learning computational models to determine relative locations of predicted anomalies within the point-cloud dataset 707. For example, the segmentation manager 708 can apply an advanced deep learning model to each of one or more LiDAR-based anomaly predictions generated by the anomaly detection DNN 705 and to each of one or more image-based anomaly predictions generated by the anomaly detection DNN 705. In at least one embodiment, the advanced deep learning model can generate relative locations of each of the anomaly predictions within the point-cloud dataset 707.

The segmentation manager 708 can then divide the point-cloud dataset 707 into segments based on these relative positions. For example, in one embodiment, the segmentation manager 708 can divide the point-cloud dataset 707 into segments where the position of a LiDAR-based anomaly prediction aligns with the position of an image-based anomaly prediction. Such an alignment may serve as a strong indicator of the presence of an anomaly at that relative location. In additional or alternative embodiments, the segmentation manager 708 may divide the point-cloud dataset 707 into segments where a size of an anomaly prediction exceeds a predetermined benchmark.

Finally, the segmentation manager 708 utilizes the segments within the point-cloud dataset 707 to determine a spatial distribution of the anomaly predictions relative to the agricultural vehicle 102 within the agricultural field 104. For example, the segmentation manager 708 can determine where a particular segment of the point-cloud dataset 707 is located relative to the agricultural vehicle 102. The segmentation manager 708 can then determine how close or far apart each of those segments are located relative to each other and the agricultural vehicle 102. If two or more segments (e.g., a segment associated with an image-based anomaly prediction and a segment associated with a LiDAR-based anomaly prediction) are located within a threshold distance of each other, the segmentation manager 708 may determine that the anomaly predictions are actually associated with a single anomaly. The segmentation manager 708 can then determine how that combined anomaly is positioned relative to the agricultural vehicle 102.

In some embodiments, the segmentation manager 708 can determine additional relationships between the one or more LiDAR-based anomaly predictions and the image-based anomaly predictions from the point-cloud dataset segments. For example, the segmentation manager 708 can determine whether the point-cloud dataset segments indicate a specific type of anomaly (e.g., a vehicle, an animal). These additional relationships are further enriched when the data fusion manager 706 incorporates additional sensor data (e.g., from the one or more RADAR units 216, the GNSS unit 228, the GSM 234) into the point-cloud dataset 707.

As further shown in FIG. 7A, the anomaly detection system 202 includes a display manager 710. In one or more embodiments, the display manager 710 generates one or more displays for the I/O device 232 associated with anomalies that are predicted to be at positions within the agricultural field 104 relative to the agricultural vehicle 102. For example, once the segmentation manager 708 utilizes the point-cloud dataset 707 and the sensor-based anomaly predictions to determine the spatial distribution of anomalies within the agricultural field 104 relative to the agricultural vehicle 102, the display manager 710 can generate a display that highlights this spatial distribution of anomalies relative to the agricultural vehicle 102. In more detail, the display manager 710 can highlight the position of anomalies relative to a current position of the agricultural vehicle 102, or relative to a path or route that the agricultural vehicle 102 is currently on. The display manager 710 can generate the display using highlight colors, bounding boxes, animations, or any other highlighting technique.

Additionally, in one or more implementations, the anomaly detection system 202 includes an agricultural vehicle safety system 712. In one or more embodiments, the agricultural vehicle safety system 712 can control operations of the agricultural vehicle 102 based on anomalies that are predicted to be within the agricultural field 104 relative to the agricultural vehicle 102. For example, in response to determining that an anomaly is within a threshold distance from the agricultural vehicle 102 or a threshold distance from a future position of the agricultural vehicle 102, the agricultural vehicle safety system 712 can control a wide range of operations in connection with the agricultural vehicle 102. To illustrate, the agricultural vehicle safety system 712 can: cause the agricultural vehicle 102 to stop moving within the agricultural field 104, cause the agricultural vehicle 102 to slow down in the agricultural field 104, cause the agricultural vehicle 102 to deviate from a pre-planned route in the agricultural field 104, cause the agricultural vehicle 102 to halt operating a front implement of the agricultural vehicle 102 or a rear implement of the agricultural vehicle 102 (e.g., a boom sprayer, a thresher, etc.), cause the agricultural vehicle 102 to use an onboard signal tower to highlight areas of the agricultural field 104 corresponding to the segmented point-cloud dataset; causing the agricultural vehicle 102 to flash onboard visual lights, or causing the agricultural vehicle 102 to sound a horn or other auditory system. In some implementations, the agricultural vehicle safety system 712 controls operations of the agricultural vehicle 102 as described above in response to determining that a confidence score associated with the detected anomaly is above a predetermined threshold.

Thus, the embodiment of the anomaly detection system 202 illustrated in FIG. 7A provides a comprehensive solution for detecting and segmenting anomalies in agricultural fields using a combination of image-based data, LiDAR-based data, and potentially other sensors. By integrating various data sensors (e.g., the one or more cameras 214 and the one or more LiDAR units 212), the anomaly detection system 202 enables accurate and robust detection and segmentation of anomalies in an agricultural setting, enhancing the safety and efficiency of agricultural operations.

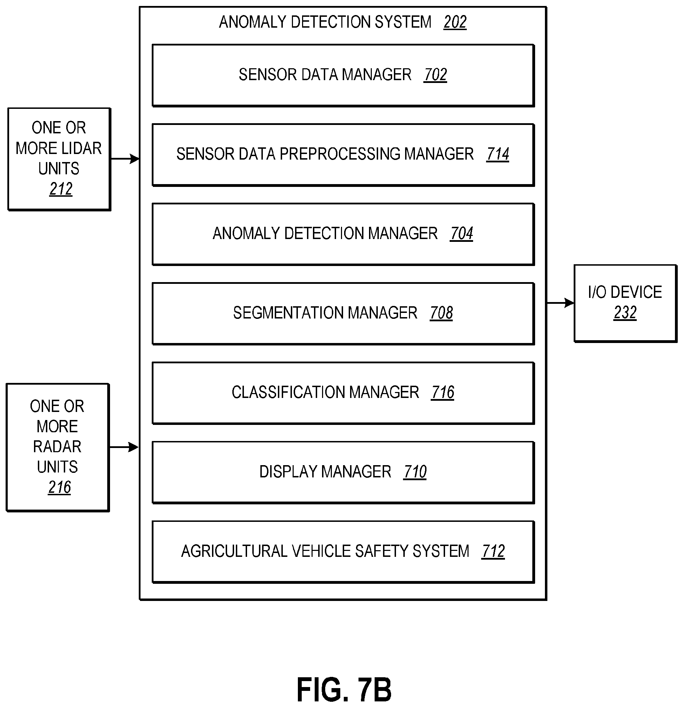

FIG. 7B illustrates another embodiment of the anomaly detection system 202. In one or more embodiments, the anomaly detection system 202 can detect both static and dynamic anomalies. As discussed above with reference to FIG. 1, agricultural anomalies can be static (e.g., non-moving) such as with pooled water 106 or the fallen tree 108. Additionally, agricultural anomalies can be dynamic (e.g., moving) such as with the person 110 walking across the agricultural field 104. As such, the anomaly detection system 202 can detect and track dynamic anomalies, while further predicting where each dynamic anomaly is moving and controlling the agricultural vehicle 102 accordingly.

As such, in connection with the embodiment illustrated in FIG. 7B, the sensor data manager 702 can receive sensor data from one or more of the one or more LiDAR units 212 and the one or more RADAR units 216. In one or more implementations, the sensor data manager 702 can acquire this sensor data sequentially in order to capture temporal data. For example, the sensor data manager 702 can acquire a sequence of LiDAR scans, a sequence of RADAR scans, or a combination of LiDAR and RADAR scans. The sequences of LiDAR and/or RADAR scans can include a series of scans captured in order within a predetermined amount of time. Thus, each sequence may capture dynamic movement of an anomaly. As discussed above, the one or more LiDAR units 212 can include one or more of rotating LiDAR units, flash LiDAR units, solid-state time of flight LiDAR units, or solid-state frequency-modulated LiDAR units. Additionally, the one or more RADAR units 216 may include one or more of frequency-modulated continuous wave RADAR units or stepped frequency modulation RADAR units.

As further shown in the embodiment illustrated in FIG. 7B, the anomaly detection system 202 can include a sensor data preprocessing manager 714. In one or more implementations, the sensor data preprocessing manager 714 preprocesses the LiDAR and/or RADAR scan sequences prior to anomaly detection. For example, the sensor data preprocessing manager 714 can filter noise and irrelevant information out of the LiDAR and/or RADAR scan sequences. Additionally, the sensor data preprocessing manager 714 can align the LiDAR and/or RADAR scan sequences in a common coordinate system thus synchronizing temporal data with the spatial data represented in the scan sequences.

Once these scan sequences are preprocessed, the anomaly detection manager 704 can generate an input vector capturing features of the scan sequences. The anomaly detection manager 704 can further apply the anomaly detection DNN 705 to the generated input vector to generate one or more anomaly predictions. For example, the anomaly detection manager 704 can apply the anomaly detection DNN 705 to the generated input vector to generate static anomaly predictions, dynamic anomaly predictions, or both static and dynamic anomaly predictions. To illustrate, because the features represented in the input vector are temporally aligned, the anomaly detection DNN 705 can detect both static and dynamic anomalies by analyzing how those features change over the period of time represented by the input vector. As such, in the embodiment illustrated in FIG. 7B, the anomaly detection DNN 705 can generate anomaly predictions including a tag or other indicator stating whether the predicted anomaly is static or dynamic.

In the embodiment illustrated in FIG. 7B, the segmentation manager 708 groups the static and/or dynamic anomaly predictions generated by the anomaly detection DNN 705 based on temporal characteristics. For example, the segmentation manager 708 can group the static and/or dynamic anomaly predictions based on temporal characteristics, such as a duration of the predicted anomaly, the speed of the predicted anomaly, or a change in the predicted anomaly's shape or size.

Next, in the embodiment illustrated in FIG. 7B, the anomaly detection system 202 includes a classification manager 716. In one or more embodiments, the classification manager 716 classifies the groups or segments of anomaly predictions into different categories. For example, the classification manager 716 can classify the segmented anomaly predictions into categories based on characteristics of the corresponding anomaly predictions such as, but not limited to, moving or stationary objects, water bodies, and so forth.

Additionally, the classification manager 716 can estimate trajectories or paths of dynamic anomalies. For example, the classification manager 716 can determine future movements for the one or more segmented dynamic anomaly predictions by: determining a current trajectory for the one or more segmented dynamic anomaly predictions based on the sequential LiDAR sensor scan data and the sequential RADAR sensor scan data, determining a current speed for the one or more segmented dynamic anomaly predictions based on the sequential LiDAR sensor scan data and the sequential RADAR sensor scan data, and utilizing the current trajectory and the current speed for the one or more segmented dynamic anomaly predictions to determine the future movements for the one or more segmented dynamic anomaly predictions.

As with the embodiment of the anomaly detection system 202 discussed above in connection with FIG. 7A, the embodiment of the anomaly detection system 202 illustrated in FIG. 7B includes the display manager 710 and the agricultural vehicle safety system 712. As discussed above, the display manager 710 can generate one or more displays for the I/O device 232 based on the predicted static and/or dynamic anomalies. For example, in some embodiments, the display manager 710 can further generate visualizations that illustrate prediction confidence intervals or uncertainty measures associated with the static and dynamic anomaly predictions.

Similarly, as discussed above, the agricultural vehicle safety system 712 can control one or more operations of the agricultural vehicle 102 based on the predicted static and/or dynamic anomalies. For example, in one implementation, the agricultural vehicle safety system 712 can control one or more operations of the agricultural vehicle 102 based on a future movement or trajectory of a predicted dynamic anomaly, as determined by the classification manager 716. For example, the agricultural vehicle safety system 712 may control operations of the agricultural vehicle 102 based on the determined future movements of a predicted dynamic anomaly by: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight a one or more anomalies indicated by the one or more dynamic anomaly predictions, causing the agricultural vehicle to flash onboard visual lights, or causing the agricultural vehicle to sound a horn or other auditory system.

As such, in the implementation described in connection with FIG. 7B, the anomaly detection system 202 can provide a comprehensive solution for temporal determination of anomaly features in both dynamic and static cases. For example, the anomaly detection system 202 does this by combining LiDAR and RADAR data for improved detection, segmentation, and tracking of anomalies in agricultural fields. By incorporating temporal information, the anomaly detection system 202 generates accurate and robust results, enhancing the safety and efficiency of agricultural operations.

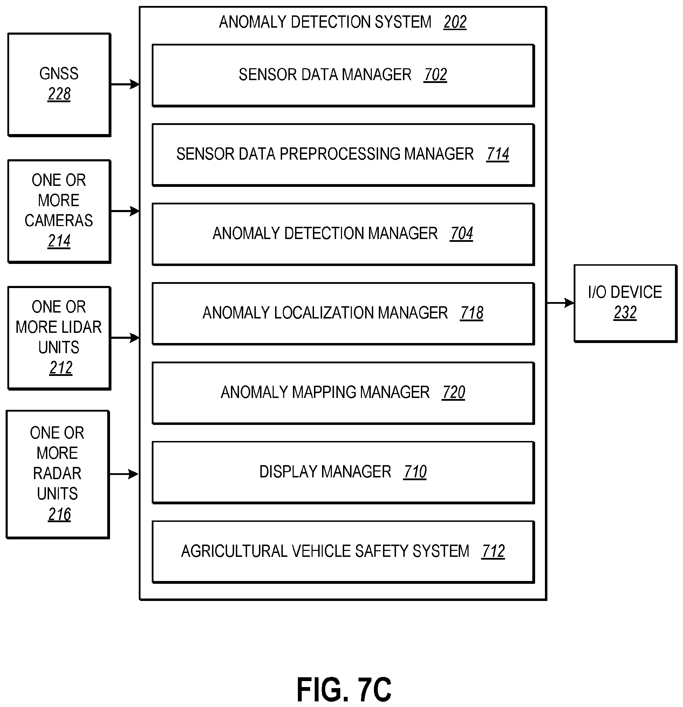

In the embodiment, illustrated in FIG. 7C, the anomaly detection system 202 can further map static anomalies in the agricultural field 104 using data from the GNSS unit 228 in addition to spatial data from the one or more cameras 214, the one or more RADAR units 216, and the one or more LiDAR units 212. For example, as shown in FIG. 7C, the sensor data manager 702 of the anomaly detection system 202 can receive or acquire high-precision GNSS data from the GNSS unit 228. In some embodiments, the GNSS unit 228 can include real-time kinematic (RTK) capability. To illustrate, this GNSS data can include precise location data for the agricultural vehicle 102 along with precise timestamps with each location reading. Additionally, the sensor data manager 702 can receive the spatial information from the one or more cameras 214 (e.g., stereo cameras), the one or more RADAR units 216, and the one or more LiDAR units 212 to further indicate a precise location of the agricultural vehicle 102 within the agricultural field 104.

In one or more embodiments, the sensor data preprocessing manager 714 can synchronize the sensor data received or acquired from the GNSS unit 228 and other sensors. For example, the sensor data preprocessing manager 714 can utilize the GNSS time references (e.g., PTP or PPS) associated with each GNSS reading or data item to synchronize any other data received from the one or more cameras 214, the one or more RADAR units 216, and the one or more LiDAR units 212. To illustrate, the sensor data preprocessing manager 714 can identify a GNSS time reference for a first GNSS data input, identify a first spatial data input with a timestamp that corresponds to the GNSS time reference, and match the first GNSS data input with the first spatial data input. For example, the GNSS time reference may include a precision time protocol (PTP) time reference or a pulse-per-second (PPS) time reference. In at least one implementation, this synchronization helps to ensure accurate alignment of spatial information with the GNSS data.

In one or more embodiments, the anomaly detection manager 704 utilizes advanced machine learning techniques to detect static anomalies in the synchronized sensor data. For example, as discussed above, the anomaly detection manager 704 can generate an input vector from the synchronized sensor data and apply the anomaly detection DNN 705 to the input vector to generate one or more static anomaly predictions within the agricultural field 104.

In at least one embodiment, the anomaly detection manager 704 can further apply one or more generative models sequentially to the one or more static anomaly predictions generated by the anomaly detection DNN 705 to further refine the one or more static anomaly predictions. For example, the anomaly detection manager 704 can apply a variational autoencoder (VAE) or a generative adversarial network (GAN) to the one or more static anomaly predictions generated by the anomaly detection DNN 705 to further refine the one or more static anomaly predictions relative to the agricultural field 104 and the position of the agricultural vehicle 102 within the agricultural field 104.

In one or more embodiments, as further shown in FIG. 7C, the anomaly detection system 202 includes an anomaly localization manager 718. For example, the anomaly localization manager 718 can localize predicted anomalies within 3D space using the high-precision GNSS data and spatial information from the additional sensors (e.g., the one or more cameras 214, the one or more LiDAR units 212, and the one or more RADAR units 216). In at least one embodiment, the anomaly localization manager 718 localizes the predicted anomalies within a 3D space by generating heatmaps, bounding boxes, segmentation masks, and so forth.

In one or more embodiments, as additionally shown in FIG. 7C, the anomaly detection system 202 includes an anomaly mapping manager 720. For example, the anomaly mapping manager 720 generates a detailed map of the predicted static anomalies within the agricultural field 104 relative to the position of the agricultural vehicle 102 based on localized data generated by the anomaly localization manager 718. To illustrate, the anomaly mapping manager 720 can align the 3D space utilized by the anomaly localization manager 718 with a current location and direction of the agricultural vehicle 102, and then generate the map based on the aligned 3D space. Additionally, the anomaly mapping manager 720 can generate the detailed map including an indication of the current position of the agricultural vehicle 102, as well as positions of the predicted static anomalies and other information indicating a distance between the agricultural vehicle 102 and the predicted static anomalies, an indication of whether a current route or path of the agricultural vehicle 102 will be impacted by the predicted static anomalies, and so forth.

In one or more embodiments, the display manager 710 can generate one or more displays for the I/O device 232 based on the detailed map generated by the anomaly mapping manager 720. For example, the display manager 710 can generate a display including the detailed map. Additionally, the display manager 710 can generate additional displays or alerts based on whether proximity between the agricultural vehicle 102 and any of the predicted static anomalies is less than a threshold amount. In at least one implementation, the display manager 710 can dynamically update the generated displays as the agricultural vehicle 102 moves through the agricultural field 104 relative to positions of the predicted static anomalies.

As discussed above, the agricultural vehicle safety system 712 can control operations of the agricultural vehicle 102 based on the predicted static anomalies. For example, in one implementation, the agricultural vehicle safety system 712 can control operations of the agricultural vehicle 102 based on the detailed map generated by the anomaly mapping manager 720. To illustrate, in response to determining that the agricultural vehicle 102 is too close to a predicted static anomaly indicated by the generated map, the agricultural vehicle safety system 712 can control operations of the agricultural vehicle 102 by: causing the agricultural vehicle 102 to stop moving in the agricultural field 104, causing the agricultural vehicle 102 to slow down in the agricultural field 104, causing the agricultural vehicle 102 to deviate from a pre-planned route in the agricultural field 104, causing the agricultural vehicle 102 to halt operating a front implement of the agricultural vehicle 102 or a rear implement of the agricultural vehicle 102, causing the agricultural vehicle 102 to use an onboard signal tower to highlight static anomalies indicated by the one or more static anomaly predictions, causing the agricultural vehicle 102 to flash onboard visual lights, or causing the agricultural vehicle 102 to sound a horn or other auditory system.

As such, in the embodiment described in connection with FIG. 7C, the anomaly detection system 202 provides a comprehensive solution for mapping static anomalies in the agricultural field 104 using the GNSS unit 228 as well as spatial data from the one or more cameras 214, the one or more LiDAR units 212, and the one or more RADAR units 216. By integrating high-precision GNSS data and advanced machine learning techniques, the anomaly detection system 202 achieves accurate and robust anomaly detection and localization, enhancing the safety and efficiency of agricultural operations.

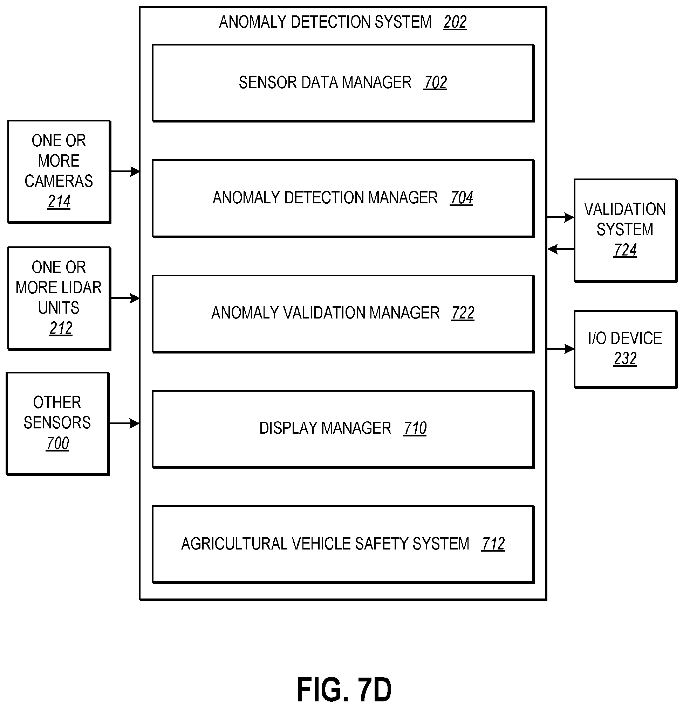

In another embodiment, the anomaly detection system 202 can leverage additional validation systems in generating anomaly predictions and controlling operations of the agricultural vehicle 102 based on those anomaly predictions. For example, as shown in FIG. 7D, the anomaly detection system 202 can utilize the sensor data manager 702 and the anomaly detection manager 704 to receive sensor data, generate an input vector, and apply the anomaly detection DNN 705 to the input vector to generate one or more anomaly predictions.

In more detail, the sensor data manager 702 can receive or acquire sensor data from one or more of the one or more cameras 214, the one or more RADAR units 216, the one or more LiDAR units 212, the GNSS unit 228, the GSM 234, the IMU 230, and/or any other sensor coupled to the agricultural vehicle 102. Moreover, the anomaly detection manager 704 can apply the anomaly detection DNN 705 to this data to generate anomaly predictions. In some implementations, the anomaly detection DNN 705 may be an auto-encoder such as the auto-encoder 302 discussed above in connection with FIG. 3. In additional implementations, the anomaly detection DNN 705 may be a different type of machine learning model such as a convolutional neural network or a transformer.

In one or more embodiments, the anomaly detection DNN 705 may generate anomaly predictions in various ways. For example, the anomaly detection DNN 705 can generate an anomaly prediction including a heat map where anomalous areas surrounding the agricultural vehicle 102 in the agricultural field 104 have a hotter heat signature (e.g., a brighter color in a visual display). In another embodiment, the anomaly detection DNN 705 can generate an anomaly prediction including one or more bounding boxes overlaid on a display of the agricultural field 104 surrounding the agricultural vehicle 102 indicating anomalous areas. In another embodiment, the anomaly detection DNN 705 may generate an anomaly prediction including one or more segmentation masks overlaid on a display of the agricultural field 104 surrounding the agricultural vehicle 102 indicating anomalous areas. In any of these embodiments, the anomaly detection DNN 705 may further include confidence scores (e.g., a likelihood that the indicated area contains an anomaly) adjacent to the anomalous areas.

In one or more implementations, the anomaly detection system 202 includes an anomaly validation manager 722. For example, the anomaly validation manager 722 can perform additional validations on the one or more anomaly predictions generated by the anomaly detection DNN 705. In at least one embodiment, the anomaly validation manager 722 interfaces with an external validation system 724. For example, the anomaly validation manager 722 can transmit the one or more anomaly predictions to the external validation system 724 for additional analysis. In one or more embodiments, the external validation system 724 can include a secondary DNN that analyzes the one or more anomaly predictions against sensor data received by the sensor data manager 702. In another embodiment, the external validation system 724 includes human evaluation where a human operator validates the one or more anomaly predictions against sensor data received by the sensor data manager 702 such as digital image sensor data. In yet another embodiment, the anomaly validation manager 722 may transmit the anomaly prediction to the I/O device 232 for display to a human driver of the agricultural vehicle 102.

In one or more embodiments, the anomaly validation manager 722 can further receive information back from the external validation system 724. For example, the external validation system 724 can transmit validations of the one or more anomaly predictions back to the anomaly validation manager 722. In response to receiving these validations, the anomaly validation manager 722 can re-train the anomaly detection DNN 705 based on the validations-thereby enhancing the accuracy of the predictions generated by the anomaly detection DNN 705. Additionally, in some implementations, the external validation system 724 can provide guidance for complex actions that should be taken by the agricultural vehicle 102 in view of the one or more anomaly predictions. For example, the external validation system 724 can provide guidance to alter a pre-planned route, to immediately stop operation of an implement (e.g., a sprayer boom, or tiller), to immediately power down the agricultural vehicle 102, and so forth. In response to receiving this guidance, the anomaly validation manager 722 can communicate these instructions to the agricultural vehicle safety system 712, the one or more additional controllers 226, or so forth.

In some implementations, the anomaly validation manager 722 can also combine sequences of digital image or point-clouds to generate a 3D visualization of the anomaly predictions prior to transmitting anomaly data to the external validation system 724. For example, these visualizations can assist human operators that are performing validations of the anomaly predictions as part of the external validation system 724.

In one or more implementations, in response to receiving validations of the one or more anomaly predictions, the display manager 710 can generate one or more displays for the I/O device 232. For example, and as discussed above, the display manager 710 can generate displays of the agricultural field 104 surrounding the agricultural vehicle 102 including heat signatures, bounding boxes, segmentation masks, etc. that indicate locations and proximities of the predicted anomalies in the agricultural field 104.

Also as discussed above, the agricultural vehicle safety system 712 can control one or more operations of the agricultural vehicle 102 based on the validations received by the anomaly validation manager 722. For example, the anomaly validation manager 722 can cause the agricultural vehicle 102 to stop moving, to slow down, and/or to deviate from a pre-planned route. Additionally, the anomaly validation manager 722 can cause the agricultural vehicle 102 to stop operating a front-end implement or a rear-end implement, can cause a horn or other alarm to sound, can cause the agricultural vehicle 102 to use an onboard signal tower to highlight anomalies indicating by the one or more anomaly predictions, can cause lights or displays within the agricultural vehicle 102 to flash, and so forth. In some implementations, the agricultural vehicle safety system 712 controls operations of the agricultural vehicle 102 in different ways depending on confidence scores associated with the anomaly predictions. For example, the agricultural vehicle safety system 712 may only stop the agricultural vehicle 102 in response to a very high confidence score associated with an anomaly prediction. As such, in the embodiment, illustrated in FIG. 7D, the anomaly detection system 202 provides a comprehensive solution for detecting anomalies in the agricultural field 104 that incorporates additional validation to increase the accuracy of anomaly detecting in this setting.

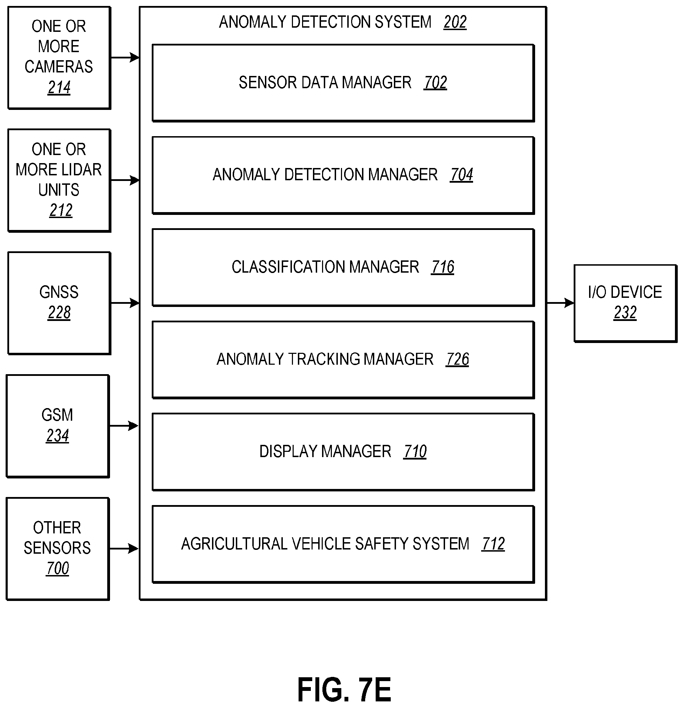

In another embodiment, the anomaly detection system 202 can track dynamic anomalies in the agricultural field 104 to improve the safety and efficiency of the agricultural vehicle 102-particularly when being automatically operated. For example, as shown in FIG. 7E, the sensor data manager 702 of the anomaly detection system 202 can acquire sensor data from one or more of the one or more cameras 214, the one or more LiDAR units 212, the GNSS unit 228, the GSM 234, and other sensors 700. As discussed above, the anomaly detection manager 704 can then generate an input vector from the acquired sensor data and apply the anomaly detection DNN 705 to the input vector to generate one or more anomaly predictions.

In some embodiments, the anomaly detection DNN 705 is an auto-encoder, such as the auto-encoder 302 discussed above in connection with FIG. 3. In additional embodiments, the anomaly detection DNN 705 may include other types of machine learning networks. For example, the anomaly detection DNN 705 may include a recurrent neural network (RNN), a long short-term memory (LSTM) network, a transformer, or a hybrid network.

In one or more embodiments, the classification manager 716 can classify each of the one or more anomaly predictions as static anomalies or dynamic anomalies. For example, the classification manager 716 can combine data from the one or more cameras 214 and the one or more LiDAR units 212 to generate a common point-cloud with extended metadata in either image space or in 3D space. Additionally, the classification manager 716 can further combine data from the one or more RADAR units 216 into the common point-cloud to add speed and distance data into the point-cloud data representation. The classification manager 716 can further segment the point-cloud based on the anomalies represented therein. From the segmented point-cloud, the classification manager 716 can then determine whether each of the one or more anomaly predictions is associated with a static anomaly or with a dynamic anomaly based on whether the anomaly predictions are associated with movement data (e.g., speed data, velocity data) within the segmented point-cloud dataset.

In one or more embodiments, as shown in FIG. 7E, the anomaly detection system 202 includes an anomaly tracking manager 726. For example, the anomaly tracking manager 726 can utilize any of various tracking methods to track dynamic anomalies indicated by the one or more anomaly predictions. As will be discussed in greater detail below, the anomaly tracking manager 726 can utilize tracking methods including camera-based tracking methods, LiDAR-based tracking methods, or combined sensor-based tracking methods.

As just mentioned, the anomaly tracking manager 726 can track dynamic anomalies indicated by the one or more anomaly predictions using camera-based tracking methods. For example, the anomaly tracking manager 726 can utilize optical-flow methods including, but not limited to, Lucas-Kanade or Gunnar-Fameback to track a dynamic anomaly over time via the one or more cameras 214 that are mounted or coupled to the agricultural vehicle 102. Additionally or alternatively, the anomaly tracking manager 726 can utilize feature-based methods that track dynamic anomalies using features extracted from camera images to identify the dynamic anomalies in the images and then match the dynamic anomalies across consecutive frames. For example, the anomaly tracking manager 726 can utilize feature-based methods such as, but not limited to SIFT, SURF, or ORB.

As mentioned above, the anomaly tracking manager 726 can track dynamic anomalies using LiDAR-based tracking methods. For example, the anomaly tracking manager 726 can perform scan matching by comparing consecutive LiDAR scans to estimate the motion of the detected anomalies. Additionally, the anomaly tracking manager 726 can utilize methods such as PointCNN and/or PointRCNN with extensions to track anomalies in point-cloud data, extended to handle dynamic anomalies. For example, PointCNN is often more focused on the classification and segmentation of point clouds using a generalization of traditional convolution operations, while PointRCNN may be tailored for 3D object detection with a two-stage proposal and refinement process. Furthermore, the anomaly tracking manager 726 can utilize methods such as Iterative Closest Point (ICP) that aligns point-clouds from consecutive LiDAR scans to estimate motion of detected anomalies.

Also as mentioned above, the anomaly tracking manager 726 can track dynamic anomalies using combined sensor-based tracking methods. For example, the anomaly tracking manager 726 can utilize sensor fusion techniques that combine data from multiple sensors, such as the one or more cameras 214 and the one or more LiDAR units 212 to improve tracking accuracy and robustness. Additionally, the anomaly tracking manager 726 can utilize techniques such as Kalman filtering and Extended Kalman filtering to estimate the state of a tracked dynamic anomaly based on a system model and the observed measurements from multiple sensors. Finally, the anomaly tracking manager 726 can utilize particle filtering (e.g., a Monte Carlo method) to track dynamic anomalies by incorporating data from multiple sensors to estimate the state of the tracked dynamic anomalies.

As discussed above, the display manager 710 of the anomaly detection system 202 can generate one or more displays associated with the tracked dynamic anomalies within the agricultural field 104. For example, the display manager 710 can generate displays highlighting a route of the agricultural vehicle 102 against predicted routes of the one or more dynamic anomalies tracked by the anomaly tracking manager 726. The display manager 710 can generate these displays along with warnings associated with potential collisions and other hazards associated with the tracked dynamic anomalies.

In one or more embodiments, the agricultural vehicle safety system 712 can determine various warning zones associated with the tracked dynamic anomalies. For example, the agricultural vehicle safety system 712 can determine a stop safety zone and an emergency safety zone. In at least one embodiment, the agricultural vehicle safety system 712 configures these safety zones dynamically such that they adapt to the speed, implement type, and turning of the agricultural vehicle 102. In this way, the agricultural vehicle safety system 712 can provide dynamic route planning to either avoid or recommend how to avoid incoming anomalies as they move into one or more of the safety zones.

In additional implementations, the agricultural vehicle safety system 712 can transmit the detected dynamic anomalies and the determined safety zones to a human operator, who then provides visual feedback and guidance for safe operation. In such implementations, the agricultural vehicle safety system 712 can additionally provide alerts or warnings to the operator when a dynamic anomaly enters a warning zone, a stop zone, an emergency zone, etc.

When fully automated, the agricultural vehicle safety system 712 can automatically determine when a tracked dynamic anomaly enters a warning zone, a stop zone, an emergency zone, etc. In response to determining that a tracked dynamic anomaly has entered a problematic zone, the agricultural vehicle safety system 712 can make real-time adjustments to the path or operation of the agricultural vehicle 102. For example, the agricultural vehicle safety system 712 can control one or more operations of the agricultural vehicle 102 by: causing the agricultural vehicle 102 to stop moving in the agricultural field 104, causing the agricultural vehicle 102 to slow down in the agricultural field 104, causing the agricultural vehicle 102 to deviate from a pre-planned route in the agricultural field 104, causing the agricultural vehicle 102 to halt operating a front implement of the agricultural vehicle 102 or a rear implement of the agricultural vehicle 102, causing the agricultural vehicle 102 to use an onboard signal tower to highlight areas of the agricultural field 104 indicated by the static anomalies and dynamic anomalies, causing the agricultural vehicle 102 to flash onboard visual lights, causing the agricultural vehicle 102 to execute predefined safety protocols, or causing the agricultural vehicle 102 to sound a horn or other auditory system.

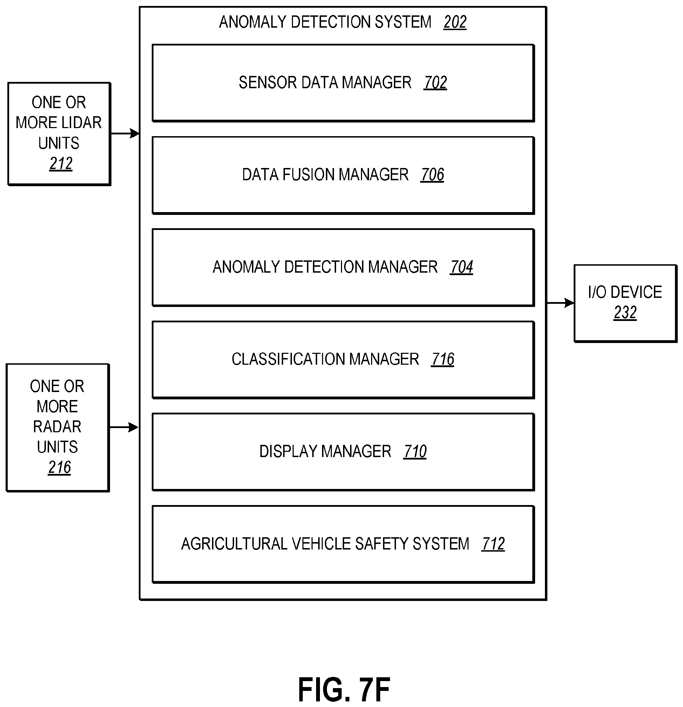

In another embodiment, the anomaly detection system 202 can utilize advanced clustering and classification techniques to further enhance the safety and efficiency of operating the agricultural vehicle 102 the agricultural field 104. For example, as shown in FIG. 7F, the anomaly detection system 202 can utilize the sensor data manager 702 to acquire sensor data from the one or more LiDAR units 212 and from the one or more RADAR units 216. In one or more embodiments, the data fusion manager 706 can pre-process this data to remove noise, correct for sensor inaccuracies, and improve data quality. The data fusion manager 706 can also fuse the data from the one or more LiDAR units 212 and the one or more RADAR units 216 to create a combined three-dimensional (3D) point-cloud dataset to provide a more detailed and accurate representation of the agricultural field 104 surrounding the agricultural vehicle 102.

As discussed above, the anomaly detection manager 704 can apply any of a variety of algorithms or approaches to the combined 3D point-cloud dataset to generate anomaly predictions. For example, in one embodiment, the anomaly detection manager 704 can apply a clustering algorithm (e.g., DBSCAN or HDBSCAN) to group similar points together and identify outliers or unusual groups within the combined 3D point-cloud dataset. In another embodiment, the anomaly detection manager 704 can utilize supervised or unsupervised machine learning techniques to classify points or regions within the combined 3D point-cloud dataset as normal or anomalous. Such techniques can include, but are not limited to, random forests, support vector machines, or deep learning models. Finally, the anomaly detection manager 704 can utilize geometric-based approaches, which analyze the shape and structure of the combined 3D point-cloud dataset to identify irregularities.

As further shown in FIG. 7F, the classification manager 716 can perform certain post-processing. For example, once the anomaly detection manager 704 makes at least one anomaly prediction, the classification manager 716 can perform additional analysis to categorize the predicted anomaly. As a result of this analysis, the classification manager 716 can estimate the size, location, and other relevant properties of the predicted anomaly.

As discussed above, the display manager 710 can generate one or more displays based on the estimates made by the classification manager 716. For example, the display manager 710 can generate displays detailing the location and classification of the detected anomaly relative to the agricultural vehicle 102. Moreover, the agricultural vehicle safety system 712 can perform various decision-making tasks based on the information determined by the classification manager 716. For example, the agricultural vehicle safety system 712 can make decisions regarding vehicle navigation, route planning, and safety measures, such as slowing down or changing direction to avoid potential obstacles. In more detail, the agricultural vehicle safety system 712 can control the agricultural vehicle 102 by: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight areas of the agricultural field indicated by the one or more anomalies, causing the agricultural vehicle to flash onboard visual lights, or causing the agricultural vehicle to sound a horn or other auditory system. As such, by leveraging the combined 3D point-cloud dataset, the anomaly detection system 202 develops a more accurate and detailed understanding of the agricultural field 104 enabling better decision-making and reducing the risk of accidents or damage to the agricultural vehicle 102 and its surroundings.

FIGS. 8A-8F illustrate simplified flow charts of methods of detecting anomalies in agricultural fields (e.g., the agricultural field 104) relative to an agricultural vehicle (e.g., the agricultural vehicle 102). For example, the method 800a shown in FIG. 8A includes a method of operating an agricultural vehicle in an agricultural field that includes an act 802 of receiving LiDAR data from one or more LiDAR units coupled to the agricultural vehicle. The method 800a may further include an act 804 of applying an anomaly detection deep neural network (DNN) to the LiDAR data to generate one or more LiDAR-based anomaly predictions associated with the agricultural field. For example, as discussed above, the anomaly detection DNN can include an auto-encoder (e.g., the auto-encoder 302 shown in FIG. 3).

Additionally, the method 800a may include receiving image data from one or more cameras coupled to the agricultural vehicle in an act 806, and further applying the anomaly detection DNN to the image data to generate one or more image-based anomaly predictions associated with the agricultural field in an act 808. In some embodiments, the anomaly detection system 202 can train the anomaly detection DNN to predict anomalies in the agricultural field by applying the anomaly detection DNN to training inputs associated with normal agricultural conditions.

In one or more embodiments, the method 800a may include fusing the LiDAR data from the one or more LiDAR units and the image data from the one or more cameras into a point-cloud dataset in an act 810. For example, fusing the LiDAR data from the one or more LiDAR units and the image data from the one or more cameras into a point-cloud dataset can include synchronizing the LiDAR data and the image data for spatial alignment, and combining features of the LiDAR data across pixels of the image data with extended metadata indicating a three-dimensional position of each pixel relative to the agricultural vehicle. In some embodiments, the method 800a can further include receiving additional sensor data from one or more of RADAR units, global navigational satellite system units, and telecommunication units coupled to the agricultural vehicle. For example, the method 800a may further include fusing the additional sensor data into the segmented point-cloud dataset and determining additional spatial and relational information associated with the one or more LiDAR-based anomaly predictions and the one or more image-based anomaly predictions based on the segmented point-cloud dataset.

In one or more embodiments, the method 800a may include segmenting the point-cloud dataset into individual segments indicating spatial distributions and relationships between anomalies represented within the point-cloud dataset by the one or more LiDAR-based anomaly predictions and the one or more image-based anomaly predictions in an act 812. For example, segmenting the point-cloud dataset into individual segments indicating spatial distributions and relationships between anomalies represented within the point-cloud dataset by the one or more LiDAR-based anomaly predictions and the one or more image-based anomaly predictions can include utilizing an advanced deep learning model to determine positions of each of the one or more LiDAR-based anomaly predictions and the one or more image-based anomaly predictions at relative locations within the point-cloud dataset, dividing the point-cloud dataset into segments based on the positions of each of the one or more LiDAR-based anomaly predictions and the one or more image-based anomaly predictions, and utilizing the segments to further determine a spatial distribution of the one or more LiDAR-based anomaly predictions and the one or more image-based anomaly predictions relative to the agricultural vehicle. In some embodiments, the method 800a may further include utilizing the segments in the point-cloud dataset to further determine additional relationships between the one or more LiDAR-based anomaly predictions and the one or more image-based anomaly predictions.

Additionally, in one or more embodiments, the method 800a may include controlling one or more operations of the agricultural vehicle based on the segmented point-cloud dataset in an act 814. For example, in some embodiments, controlling the one or more operations of the agricultural vehicle based on the segmented point-cloud dataset can include one or more of: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight areas of the agricultural field corresponding to the segmented point-cloud dataset, causing the agricultural vehicle to flash onboard visual lights, or causing the agricultural vehicle to sound a horn or other auditory system. Additionally, in some embodiments, the method 800a further includes generating a graphical user interface including the segmented point-cloud dataset for display on a computing device coupled to the agricultural vehicle.

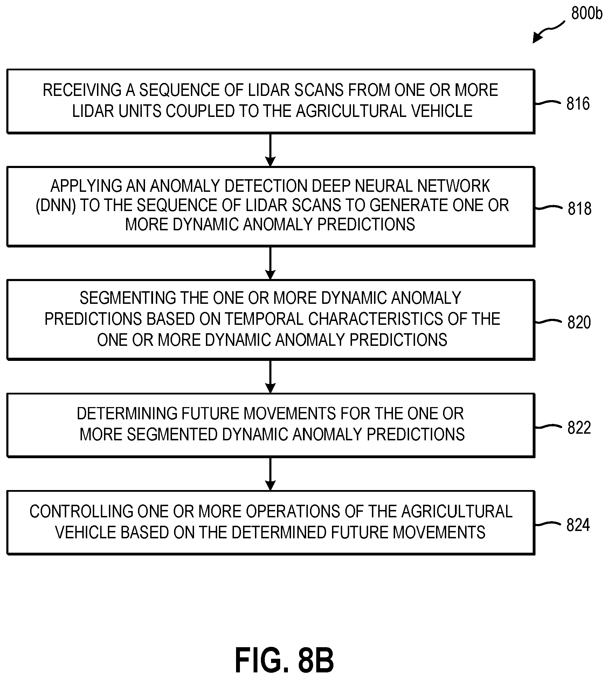

The method 800b shown in FIG. 8B includes a method of operating an agricultural vehicle in an agricultural field that includes an act 816 of receiving a sequence of LiDAR scans from one or more LiDAR units coupled to the agricultural vehicle. For example, the one or more LiDAR units can include one or more of rotating LiDAR units, flash LiDAR units, solid-state time of flight LiDAR units, or solid-state frequency-modulated LiDAR units. Additionally, receiving the sequence of LiDAR scans from the one or more LiDAR units can include receiving a predetermined number of LiDAR scans in order that were taken by the one or more LiDAR units within a predetermined amount of time. In some embodiments, the method 800b can include receiving a sequence of RADAR scans from one or more RADAR units coupled to the agricultural vehicle. For example, the one or more RADAR units can include one or more of frequency-modulated continuous wave RADAR units or stepped frequency modulation RADAR units.

In one or more embodiments, the method 800b may further include preprocessing the sequence of LiDAR scans and the sequence of RADAR scans. For example, preprocessing the sequence of LiDAR scans and the sequence of RADAR scans can include one or more of: filtering noise out of the sequence of LiDAR scans and the sequence of RADAR scans, aligning the sequence of LiDAR scans and the sequence of RADAR scans to a common coordinate system, and synchronizing sequence of LiDAR scans and the sequence of RADAR scans.

In one or more embodiments, the method 800b may include applying an anomaly detection deep neural network (DNN) to the sequence of LiDAR scans to generate one or more dynamic anomaly predictions in an act 818. Additionally, in some embodiments, the method 800b may further include applying the anomaly detection DNN to the sequence of LiDAR scans and the sequence of RADAR scans to generate one or more static anomaly predictions.

In one or more embodiments, the method 800b may include segmenting the one or more dynamic anomaly predictions based on temporal characteristics of the one or more dynamic anomaly predictions in an act 820. For example, segmenting the one or more dynamic anomaly predictions based on temporal characteristics of the one or more dynamic anomaly predictions may include segmenting the one or more dynamic anomaly predictions based on one or more of durations of the one or more dynamic anomaly predictions, speeds of the one or more dynamic anomaly predictions, and changes in shapes or sizes of the one or more dynamic anomaly predictions.

In one or more embodiments, the method 800b may further include classifying the one or more segmented dynamic anomaly predictions into categories based on characteristics of the one or more dynamic anomaly predictions, and generating one or more visualizations that illustrate prediction confidence intervals or uncertainty measures on a display incorporated into the agricultural vehicle.

In one or more embodiments, the method 800b may include determining future movements for the one or more segmented dynamic anomaly predictions in an act 822. For example, determining future movements for the one or more segmented dynamic anomaly predictions may include determining a current trajectory for the one or more segmented dynamic anomaly predictions, determining a current speed for the one or more segmented dynamic anomaly predictions, and utilizing the current trajectory and the current speed for the one or more segmented dynamic anomaly predictions to determine the future movements for the one or more segmented dynamic anomaly predictions.

In one or more embodiments, the method 800b may further include generating a graphical user interface including the segmented dynamic anomaly predictions for display on a computing device coupled to the agricultural vehicle.

In one or more embodiments, the method 800b may include controlling one or more operations of the agricultural vehicle based on the determined future movements in an act 824. For example, controlling the one or more operations of the agricultural vehicle based on the determined future movements may include one or more of: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight a one or more anomalies indicated by the one or more dynamic anomaly predictions, causing the agricultural vehicle to flash onboard visual lights, or causing the agricultural vehicle to sound a horn or other auditory system.

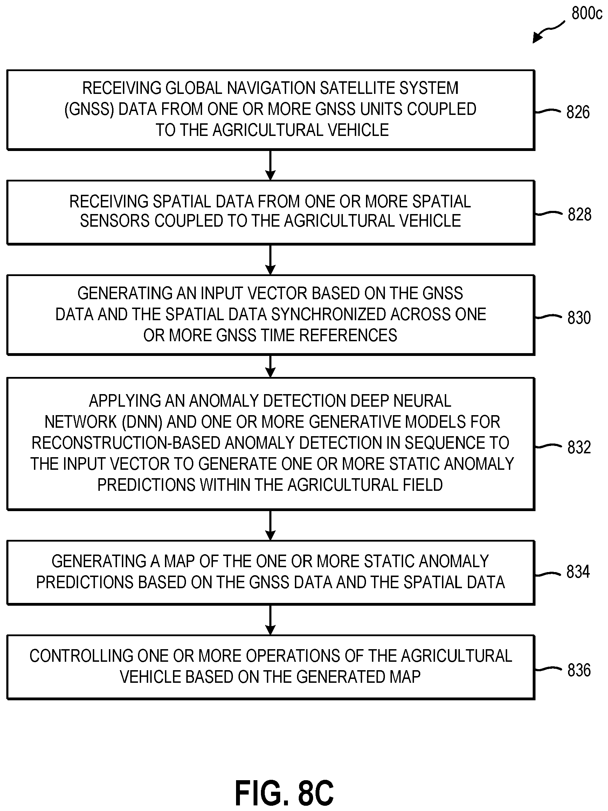

The method 800c shown in FIG. 8C includes a method of operating an agricultural vehicle in an agricultural field that includes an act 826 of receiving global navigation satellite system (GNSS) data from one or more GNSS units coupled to the agricultural vehicle. For example, as discussed above, the one or more GNSS units (e.g., the GNSS unit 228 discussed in connection with FIG. 2) may include real-time kinematic (RTK) capability.

In one or more embodiments, the method 800c may further include receiving spatial data from one or more spatial sensors coupled to the agricultural vehicle in an act 828. For example, the one or more spatial sensors coupled to the agricultural vehicle can include one or more of stereo cameras (e.g., the one or more cameras 214), LiDAR units (e.g., the one or more LiDAR units 212), or RADAR units (e.g., the one or more RADAR units 216).

In one or more embodiments, the method 800c may further include generating an input vector based on the GNSS data and the spatial data synchronized across one or more GNSS time references in an act 830. For example, the method 800c may include utilizing a transformer to synchronize the GNSS data and the spatial data across the one or more GNSS time references by: identifying a GNSS time reference for a first GNSS data input, identifying a first spatial data input with a timestamp that corresponds to the GNSS time reference, and matching the first GNSS data input with the first spatial data input. In at least one embodiment, the one or more GNSS time references include precision time protocol (PTP) time references or pulse-per-second (PPS) time references).

In one or more embodiments, the method 800c may further include applying an anomaly detection deep neural network (DNN) and one or more generative models for reconstruction-based anomaly detection in sequence to the input vector to generate one or more static anomaly predictions within the agricultural field in an act 832. For example, the one or more generative models for reconstruction-based anomaly detection can include one or more of a variational autoencoder (VAE) or a generative adversarial network (GAN).

In one or more embodiments, the method 800c may further include generating a map of the one or more static anomaly predictions based on the GNSS data and the spatial data in an act 834. For example, in some embodiments, the method 800c further includes localizing the one or more static anomaly predictions within a 3D space using the GNSS data and the spatial data by generating one or more of heatmaps, bounding boxes, or segmentation masks. Additionally, generating the map of the one or more static anomaly predictions may include aligning the 3D space with a current location and direction of the agricultural vehicle, and generating the map based on the aligned 3D space.

In one or more embodiments, the method 800c may further include controlling one or more operations of the agricultural vehicle based on the generated map in an act 836. For example, controlling the one or more operations of the agricultural vehicle based on the generated map may include one or more of: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight static anomalies indicated by the one or more static anomaly predictions, causing the agricultural vehicle to flash onboard visual lights, or causing the agricultural vehicle to sound a horn or other auditory system.

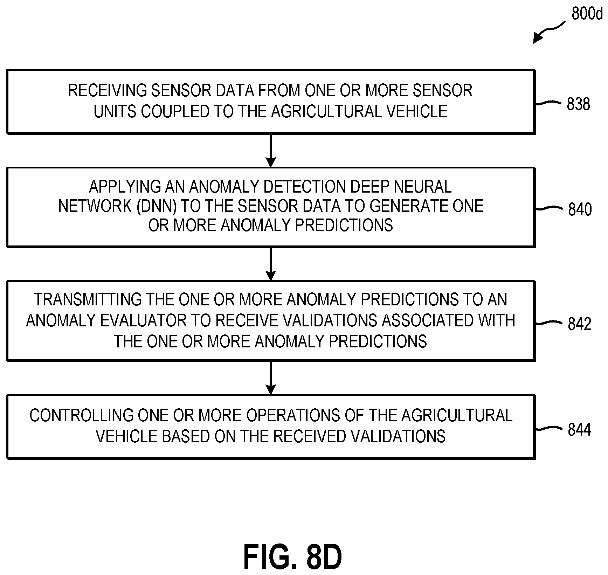

The method 800d shown in FIG. 8D includes a method of operating an agricultural vehicle in an agricultural field that includes an act 838 of receiving sensor data from one or more sensor units coupled to the agricultural vehicle. For example, the one or more sensor units can include a camera unit (e.g., the one or more cameras 214), a LiDAR unit (e.g., the one or more LiDAR units 212), and/or a RADAR unit (e.g., the one or more RADAR units 216).

In one or more embodiments, the method 800d may further include applying an anomaly detection deep neural network (DNN) to the sensor data to generate one or more anomaly predictions in an act 840. For example, the anomaly detection DNN can include at least one of an auto-encoder (e.g., the auto-encoder 302 shown in FIG. 3), a convolutional neural network, or a transformer. In one or more embodiments, the one or more anomaly predictions may include one or more of a heat map where anomalous areas surrounding the agricultural vehicle in the agricultural field have a hotter heat signature, one or more bounding boxes overlaid on a display of the agricultural field surrounding the agricultural vehicle indicating anomalous areas, or one or more segmentation masks overlaid on a display of the agricultural field surrounding the agricultural vehicle indicating anomalous areas. For example, the heat map further may include likelihood percentages adjacent to the anomalous areas.

In one or more embodiments, the method 800d may further include transmitting the one or more anomaly predictions to an anomaly evaluator to receive validations associated with the one or more anomaly predictions in an act 842. For example, transmitting the one or more anomaly predictions to the anomaly evaluator comprises one or more of: transmitting the one or more anomaly predictions to secondary DNN for validation, transmitting the one or more anomaly predictions to a human evaluator in a secondary location, or transmitting the one or more anomaly predictions to a display system coupled to the agricultural vehicle for display to a human driver of the agricultural vehicle.

In one or more embodiments, the method 800d may further include controlling one or more operations of the agricultural vehicle based on the received validations in an act 844. For example, controlling the one or more operations of the agricultural vehicle based on the received validations comprises one or more of: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight anomalies indicating by the one or more anomaly predictions, causing the agricultural vehicle to flash onboard visual lights, or causing the agricultural vehicle to sound a horn or other auditory system.

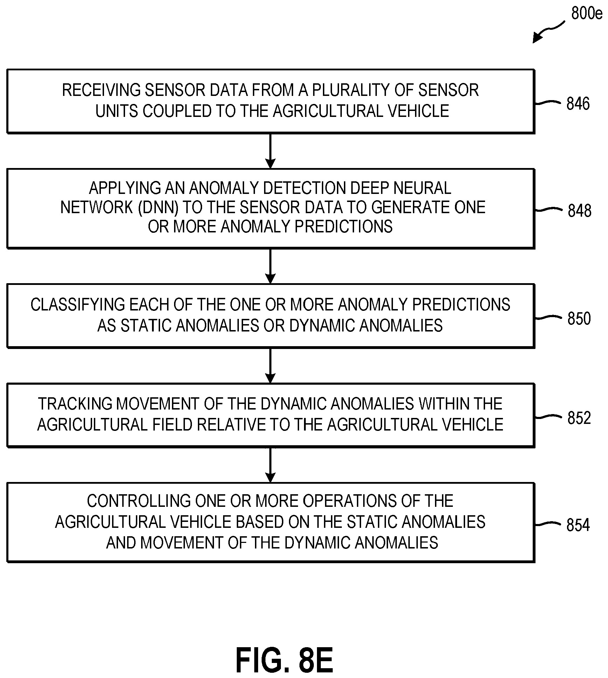

The method 800e shown in FIG. 8E includes a method of operating an agricultural vehicle in an agricultural field that includes an act 846 of receiving sensor data from a plurality of sensor units coupled to the agricultural vehicle. For example, the sensor units coupled to the agricultural vehicle 102 can include one or more of cameras (e.g., the one or more cameras 214), LiDAR units (e.g., the one or more LiDAR units 212), or GNSS units (e.g., the GNSS unit 228). In some embodiments, the method 800e further includes combining the sensor data from the plurality of sensor units into a point-cloud dataset.

In one or more embodiments, the method 800e may further include applying an anomaly detection deep neural network (DNN) to the sensor data to generate one or more anomaly predictions in an act 848. For example, the anomaly detection DNN can include at least one of an auto-encoder (e.g., the auto-encoder 302 discussed above), a recurrent neural network (RNN), a long short-term memory (LSTM) network, a transformer, or a hybrid network. In at least one embodiment, the method 800e can further include segmenting the point-cloud dataset into individual segments based on the one or more anomaly predictions.

In one or more embodiments, the method 800e may further include classifying each of the one or more anomaly predictions as static anomalies or dynamic anomalies in an act 850. For example, in one embodiment, the method 800e can include classifying each of the one or more anomaly predictions as static anomalies or dynamic anomalies by utilizing the individual segments of the point-cloud dataset.

In one or more embodiments, the method 800e may further include tracking movement of the dynamic anomalies within the agricultural field relative to the agricultural vehicle in an act 852. For example, tracking the movement of the dynamic anomalies within the agricultural field relative to the agricultural vehicle may utilize one or more of camera-based tracking methods, LiDAR-based tracking methods, uncertainty estimation models that determine confidence scores associated with tracking predictions, or combined sensor-based tracking methods. In more detail, camera-based tracking methods can include one or more of an optical flow method or a feature-based tracking method. Additionally, LiDAR-based tracking methods can include one or more of a scan matching method, a point-cloud based tracking method, or an iterative closest point tracking method. Furthermore, combined sensor-based tracking methods can include one or more of a sensor fusion method, a Kalman filtering method, or a particle filtering method.

In one or more embodiments, the method 800e may further include controlling one or more operations of the agricultural vehicle based on the static anomalies and movement of the dynamic anomalies in an act 854. For example, controlling the one or more operations of the agricultural vehicle based on the static anomalies and movement of the dynamic anomalies comprises one or more of: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight areas of the agricultural field indicated by the static anomalies and dynamic anomalies, causing the agricultural vehicle to flash onboard visual lights, or causing the agricultural vehicle to sound a horn or other auditory system.

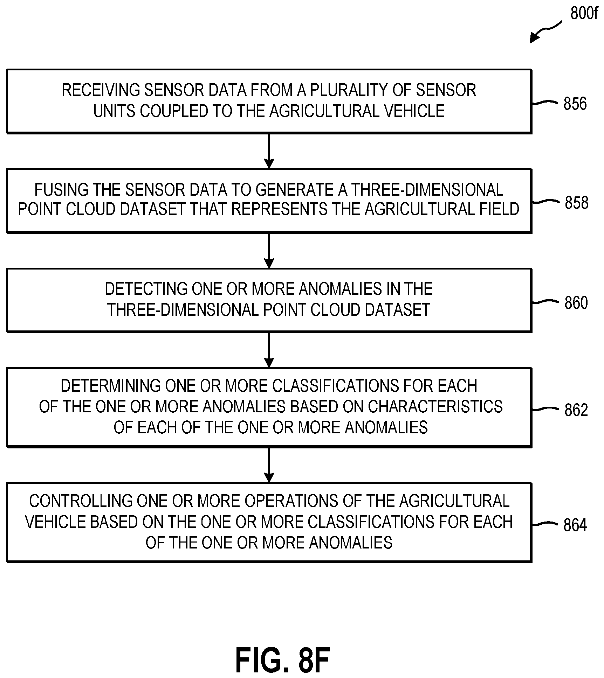

The method 800f shown in FIG. 8F includes a method of operating an agricultural vehicle in an agricultural field that includes an act 856 of receiving sensor data from a plurality of sensor units coupled to the agricultural vehicle. For example, the plurality of sensor units coupled to the agricultural vehicle 102 can include one or more of LiDAR units (e.g., the one or more LiDAR units 212) or RADAR units (e.g., the one or more RADAR units 216). In some embodiments, the method 800f further includes preprocessing the sensor data to remove noise, correct for sensor inaccuracies, and improve data quality.

In one or more embodiments, the method 800f may further include fusing the sensor data to generate a three-dimensional point-cloud dataset that represents the agricultural field in an act 858. For example, as discussed above, fusing the sensor data into a three-dimensional point-cloud dataset can include extracting features of the sensor data, synchronizing the extracted features, and positioning the extracted features within the three-dimensional point-cloud dataset to represent relationships (e.g., temporal relationships, spatial relationships) among the sensor data.

In one or more embodiments, the method 800f may further include detecting one or more anomalies in the three-dimensional point-cloud dataset in an act 860. For example, detecting the one or more anomalies in the three-dimensional point-cloud dataset can include one or more of: detecting the one or more anomalies by applying one or more clustering algorithms to the three-dimensional point-cloud dataset, detecting the one or more anomalies utilizing machine learning techniques in connection with the three-dimensional point-cloud dataset, or detecting the one or more anomalies utilizing geometric-based approaches in connection with the three-dimensional point-cloud dataset.

In more detail, detecting the one or more anomalies by applying one or more clustering algorithms to the three-dimensional point-cloud dataset can include grouping similar points within the three-dimensional point-cloud dataset together to identify outliers or unusual groups of points. Additionally, detecting the one or more anomalies utilizing machine learning techniques in connection with the three-dimensional point-cloud dataset can include classifying points or regions within the three-dimensional point-cloud dataset as normal or anomalous utilizing one or more of random forests, support vector machines, or deep learning models. Furthermore, detecting the one or more anomalies utilizing geometric-based approaches in connection with the three-dimensional point-cloud dataset can include analyzing a shape and structure of the three-dimensional point-cloud dataset to identify irregularities.

In one or more embodiments, the method 800f may further include determining one or more classifications for each of the one or more anomalies based on characteristics of each of the one or more anomalies in an act 862. For example, determining one or more classifications for each of the one or more anomalies based on characteristics of each of the one or more anomalies can include determining one or more of a size of each of the one or more anomalies, determining a location relative to the agricultural vehicle of each of the one or more anomalies, determining additional properties of each of the one or more anomalies.

In one or more embodiments, the method 800f may further include controlling one or more operations of the agricultural vehicle based on the one or more classifications for each of the one or more anomalies in an act 864. For example, controlling one or more operations of the agricultural vehicle based on the one or more classifications for each of the one or more anomalies comprises one or more of: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight areas of the agricultural field indicated by the one or more anomalies, causing the agricultural vehicle to flash onboard visual lights, or causing the agricultural vehicle to sound a horn or other auditory system.

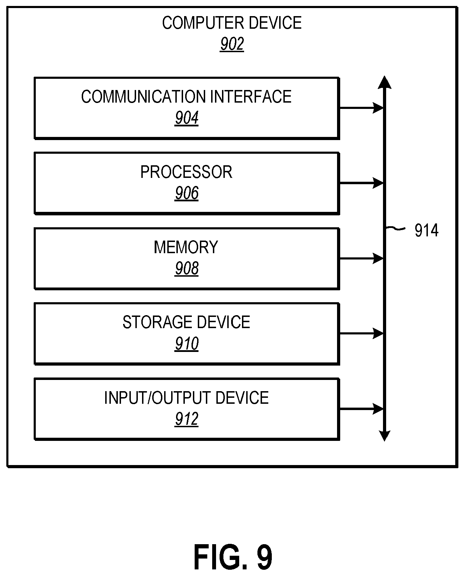

FIG. 9 is a schematic view of a computer device 902, in accordance with embodiments of the disclosure. The computer device 902 may correspond to the computing device 218 (FIG. 2). The computer device 902 may include a communication interface 904, at least one processor 906, a memory 908, a storage device 910, an input/output device 912, and a bus 914. The computer device 902 may be used to implement various functions, operations, acts, processes, and/or methods disclosed herein, such as the methods 800a-800f.

The communication interface 904 may include hardware, software, or both. The communication interface 904 may provide one or more interfaces for communication (such as, for example, packet-based communication) between the computer device 902 and one or more other computing devices or networks (e.g., a server). As an example, and not by way of limitation, the communication interface 904 may include a network interface controller (NIC) or network adapter for communicating with an Ethernet or other wire-based network or a wireless NIC (WNIC) or wireless adapter for communicating with a wireless network, such as a Wi-Fi.

The at least one processor 906 may include hardware for executing instructions, such as those making up a computer program. By way of non-limiting example, to execute instructions, the at least one processor 906 may retrieve (or fetch) the instructions from an internal register, an internal cache, the memory 908, or the storage device 910 and decode and execute them to execute instructions. In some embodiments, the at least one processor 906 includes one or more internal caches for data, instructions, or addresses. The at least one processor 906 may include one or more instruction caches, one or more data caches, and one or more translation look aside buffers (TLBs). Instructions in the instruction caches may be copies of instructions in the memory 908 or the storage device 910.

The memory 908 may be coupled to the at least one processor 906. The memory 908 may be used for storing data, metadata, and programs for execution by the processor(s). The memory 908 may include one or more of volatile and non-volatile memories, such as Random-Access Memory ("RAM"), Read-Only Memory ("ROM"), a solid-state disk ("SSD"), Flash, Phase Change Memory ("PCM"), or other types of data storage. The memory 908 may be internal or distributed memory.

The storage device 910 may include storage for storing data or instructions. As an example, and not by way of limitation, storage device 910 may include a non-transitory storage medium described above. The storage device 910 may include a hard disk drive (HDD), Flash memory, an optical disc, a magneto-optical disc, magnetic tape, or a Universal Serial Bus (USB) drive or a combination of two or more of these. The storage device 910 may include removable or non-removable (or fixed) media, where appropriate. The storage device 910 may be internal or external to the storage device 910. In one or more embodiments, the storage device 910 is non-volatile, solid-state memory. In other embodiments, the storage device 910 includes read-only memory (ROM). Where appropriate, this ROM may be a mask programmed ROM, programmable ROM (PROM), erasable PROM (EPROM), electrically erasable PROM (EEPROM), electrically alterable ROM (EAROM), or Flash memory or a combination of two or more of these.

The storage device 910 may include machine-executable code stored thereon. The storage device 910 may include, for example, a non-transitory computer-readable storage medium. The machine-executable code includes information describing functional elements that may be implemented by (e.g., performed by) the at least one processor 906. The at least one processor 906 is adapted to implement (e.g., perform) the functional elements described by the machine-executable code. In some embodiments the at least one processor 906 may be configured to perform the functional elements described by the machine-executable code sequentially, concurrently (e.g., on one or more different hardware platforms), or in one or more parallel process streams.

When implemented by the at least one processor 906, the machine-executable code is configured to adapt the at least one processor 906 to perform operations of embodiments disclosed herein. For example, the machine-executable code may be configured to adapt the at least one processor 906 to perform at least a portion or a totality of any of the methods 800a-800f of FIGS. 8A-8F. As another example, the machine-executable code may be configured to adapt the at least one processor 906 to perform at least a portion or a totality of the operations discussed for the agricultural vehicle 102 of FIG. 2. As a specific, non-limiting example, the machine-executable code may be configured to adapt the at least one processor 906 to cause the I/O device 232 of the agricultural vehicle 102 to display surroundings of the agricultural vehicle 102 including labeled instances of objects surrounding the vehicle, as described above with reference to the anomaly detection system 202. In another non-limiting example, the machine-executable code may be configured to adapt the at least one processor 906 to cause the agricultural vehicle 102 to perform at least one navigation operation, as described above with reference to the methods 800a-800f of FIGS. 8A-8F, respectively.

The input/output device 912 may allow an operator of the agricultural vehicle 102 to provide input to, receive output from, the computer device 902. The input/output device 912 may include a mouse, a keypad or a keyboard, a joystick, a touch screen, a camera, an optical scanner, network interface, modem, other known I/O devices, or a combination of such I/O interfaces.

In some embodiments, the bus 914 (*e.g.,* a Controller Area Network (CAN) bus, an ISOBUS (ISO 11783 Compliant Implement Control)) may include hardware, software, or both that couples components of computer device 902 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. A method of operating an agricultural vehicle in an agricultural field, the method comprising:
receiving sensor data from a plurality of sensor units coupled to the agricultural vehicle;
fusing the sensor data to generate a three-dimensional point-cloud dataset that represents the agricultural field;
detecting one or more anomalies in the three-dimensional point-cloud dataset;
determining one or more classifications for each of the one or more anomalies based on characteristics of each of the one or more anomalies; and
controlling one or more operations of the agricultural vehicle based on the one or more classifications for each of the one or more anomalies.

2. The method as recited in claim 1, wherein the plurality of sensor units coupled to the agricultural vehicle comprise one or more of LiDAR units or RADAR units, wherein the LiDAR units comprise one or more of rotating LiDAR units, flash LiDAR units, solid-state time of flight LiDAR units, or solid-state frequency-modulated LiDAR units, and wherein the RADAR units comprise one or more of frequency-modulated continuous wave RADAR units or stepped frequency modulation RADAR units.

3. The method as recited in claim 1 or claim 2, further comprising preprocessing the sensor data to remove noise, correct for sensor inaccuracies, and improve data quality.

4. The method as recited in any one of claims 1 through 3, wherein detecting the one or more anomalies in the three-dimensional point-cloud dataset comprises one or more of:
detecting the one or more anomalies by applying one or more clustering algorithms to the three-dimensional point-cloud dataset;
detecting the one or more anomalies utilizing machine learning techniques in connection with the three-dimensional point-cloud dataset; or
detecting the one or more anomalies utilizing geometric-based approaches in connection with the three-dimensional point-cloud dataset.

5. The method as recited in claim 4, wherein detecting the one or more anomalies by applying one or more clustering algorithms to the three-dimensional point-cloud dataset comprises grouping similar points within the three-dimensional point-cloud dataset together to identify outliers or unusual groups of points.

6. The method as recited in claim 4 or claim 5, wherein detecting the one or more anomalies utilizing machine learning techniques in connection with the three-dimensional point-cloud dataset comprises classifying points or regions within the three-dimensional point-cloud dataset as normal or anomalous utilizing one or more of random forests, support vector machines, or deep learning models.

7. The method as recited in any one of claim 4 through 6, wherein detecting the one or more anomalies utilizing geometric-based approaches in connection with the three-dimensional point-cloud dataset comprises analyzing a shape and structure of the three-dimensional point-cloud dataset to identify irregularities.

8. The method as recited in any one of claims 1 through 7, wherein determining one or more classifications for each of the one or more anomalies based on characteristics of each of the one or more anomalies comprises determining one or more of a size of each of the one or more anomalies, determining a location relative to the agricultural vehicle of each of the one or more anomalies, determining additional properties of each of the one or more anomalies.

9. The method as recited in any one of claims 1 through 7, wherein controlling one or more operations of the agricultural vehicle based on the one or more classifications for each of the one or more anomalies comprises one or more of:
causing the agricultural vehicle to stop moving in the agricultural field;
causing the agricultural vehicle to slow down in the agricultural field;
causing the agricultural vehicle to deviate from a pre-planned route in the agricultural field;
causing the agricultural vehicle to halt operating a front implement of the agricultural vehicle or a rear implement of the agricultural vehicle;
causing the agricultural vehicle to use an onboard signal tower to highlight areas of the agricultural field indicated by the one or more anomalies;
causing the agricultural vehicle to flash onboard visual lights; or
causing the agricultural vehicle to sound a horn or other auditory system.

10. An agricultural vehicle positioned in an agricultural field, comprising:
one or more sensors operably coupled to the agricultural vehicle; and
an anomaly detection system operably coupled to the one or more sensors, the anomaly detection system comprising:
at least one processor; and
at least one non-transitory computer-readable storage medium having instructions thereon that, when executed by the at least one processor, cause the anomaly detection system to:
receive sensor data from a plurality of sensor units coupled to the agricultural vehicle;
fuse the sensor data to generate a three-dimensional point-cloud dataset that represents an agricultural field where the agricultural vehicle is located;
detect one or more anomalies in the three-dimensional point-cloud dataset;
determine one or more classifications for each of the one or more anomalies
based on characteristics of each of the one or more anomalies; and control one or more operations of the agricultural vehicle based on the one or
more classifications for each of the one or more anomalies.

11. The agricultural vehicle as recited in claim 10, wherein the plurality of sensor units coupled to the agricultural vehicle comprise one or more of LiDAR units or RADAR units, wherein the LiDAR units comprise one or more of rotating LiDAR units, flash LiDAR units, solid-state time of flight LiDAR units, or solid-state frequency-modulated LiDAR units, and wherein the RADAR units comprise one or more of frequency-modulated continuous wave RADAR units or stepped frequency modulation RADAR units.

12. The agricultural vehicle as recited in claim 10 or claim 11, wherein the at least one non-transitory computer-readable storage medium further stores instructions thereon that, when executed by the at least one processor, cause the anomaly detection system to preprocess the sensor data to remove noise, correct for sensor inaccuracies, and improve data quality.

13. The agricultural vehicle as recited in any one of claims 10 through 12, wherein the at least one non-transitory computer-readable storage medium further stores instructions thereon that, when executed by the at least one processor, cause the anomaly detection system to detect the one or more anomalies in the three-dimensional point-cloud dataset by one or more of:
detecting the one or more anomalies by applying one or more clustering algorithms to the three-dimensional point-cloud dataset;
detecting the one or more anomalies utilizing machine learning techniques in connection with the three-dimensional point-cloud dataset; or
detecting the one or more anomalies utilizing geometric-based approaches in connection with the three-dimensional point-cloud dataset.

14. The agricultural vehicle as recited in any one of claims 10 through 13, wherein detecting the one or more anomalies by applying one or more clustering algorithms to the three-dimensional point-cloud dataset comprises grouping similar points within the three-dimensional point-cloud dataset together to identify outliers or unusual groups of points.

15. The agricultural vehicle as recited in any one of claims 10 through 14, wherein detecting the one or more anomalies utilizing machine learning techniques in connection with the three-dimensional point-cloud dataset comprises classifying points or regions within the three-dimensional point-cloud dataset as normal or anomalous utilizing one or more of random forests, support vector machines, or deep learning models.
